(19) Europäisches Patentamt
European Patent Office
Office européen des brevets

(11) **EP 3 229 104 A1**

(12) **EUROPEAN PATENT APPLICATION**
published in accordance with Art. 153(4) EPC

(43) Date of publication:
**11.10.2017 Bulletin 2017/41**

(21) Application number: **15865988.8**

(22) Date of filing: **08.09.2015**

(51) Int Cl.:
*G06F 3/01* (2006.01)　　　*G06F 3/0484* (2013.01)
*G06T 19/00* (2011.01)　　　*G09G 5/00* (2006.01)
*G09G 5/36* (2006.01)

(86) International application number:
**PCT/JP2015/075492**

(87) International publication number:
**WO 2016/088420 (09.06.2016 Gazette 2016/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **04.12.2014 JP 2014245935**

(71) Applicant: **Sony Corporation
Tokyo 108-0075 (JP)**

(72) Inventors:
• **ISHIKAWA, Hirotaka
Tokyo 108-0075 (JP)**
• **IWATSU, Takeshi
Tokyo 108-0075 (JP)**

(74) Representative: **Witte, Weller & Partner
Patentanwälte mbB
Postfach 10 54 62
70047 Stuttgart (DE)**

(54) **DISPLAY CONTROL DEVICE, DISPLAY CONTROL METHOD, AND PROGRAM**

(57)　　To improve retrieval performance of an object displayed in the visual field of the user.

There is provided a display control apparatus including a display control unit configured to display an object corresponding to at least one of a yaw angle and a pitch angle of a display unit in a visual field of a user. The display control unit is capable of operating in a first mode in which a position of the object in the visual field is not dependent on a roll angle of the display unit.

**FIG. 1**

EP 3 229 104 A1

**Description**

Technical Field

The present disclosure relates to a display control apparatus, a display control method, and a program.

Background Art

Recently, a technology of adding an object corresponding to a real space to a visual field of a user, which is called augmented reality (AR), has been known. For example, there is disclosed a head mounted display capable of displaying an object related to a subject present in an external world that the user views, for example (see Patent Literature 1).

Citation List

Patent Literature

Patent Literature 1:    JP 2012-53643A

Disclosure of Invention

Technical Problem

However, it is desired that retrieval performance of an object displayed in the visual field of the user be improved. Accordingly, the present technology proposes a technology that can improve retrieval performance of an object displayed in the visual field of the user.

Solution to Problem

According to the present technology, there is provided a display control apparatus including a display control unit configured to display an object corresponding to at least one of a yaw angle and a pitch angle of a display unit in a visual field of a user. The display control unit is capable of operating in a first mode in which a position of the object in the visual field is not dependent on a roll angle of the display unit.
Further, according to the present technology, there is provided a display control method including displaying an object corresponding to at least one of a yaw angle and a pitch angle of a display unit in a visual field of a user. Operation is possible in a first mode in which a position of the object in the visual field is not dependent on a roll angle of the display unit.
Further, according to the present technology, there is provided a program for causing a computer to function as a display control apparatus including a display control unit configured to display an object corresponding to at least one of a yaw angle and a pitch angle of a display unit in a visual field of a user. The display control unit is capable of operating in a first mode in which a position of the object in the visual field is not dependent on a roll angle of the display unit.

Advantageous Effects of Invention

As described above, according to the present technology, it is possible to improve retrieval performance of an object displayed in the visual field of the user. Note that the effects described above are not necessarily limitative. With or in the place of the above effects, there may be achieved any one of the effects described in this specification or other effects that may be grasped from this specification.

Brief Description of Drawings

[FIG. 1] FIG. 1 is a schematic diagram explaining functions of a head mounted display according to an embodiment of the present technology.
[FIG. 2] FIG. 2 is an overall view illustrating the above-described head mounted display.

[FIG. 3] FIG. 3 is a block diagram illustrating a configuration of a system including the above-described head mounted display.

[FIG. 4] FIG. 4 is a functional block diagram of a control unit in the above-described head mounted display.

[FIG. 5A] FIG. 5A is a schematic diagram illustrating cylindrical coordinates as an example of a world coordinate system in the above-described head mounted display.

[FIG. 5B] FIG. 5B is a schematic diagram illustrating cylindrical coordinates as an example of a world coordinate system in the above-described head mounted display.

[FIG. 6A] FIG. 6A is a development view of the cylindrical coordinates illustrated in FIG. 5A.

[FIG. 6B] FIG. 6B is a development view of the cylindrical coordinates illustrated in FIG. 5B.

[FIG. 7] FIG. 7 is an explanatory diagram of a coordinate position in the above-described cylindrical coordinate system.

[FIG. 8] FIG. 8 is a development diagram of the above-described cylindrical coordinates schematically illustrating relationship between a visual field and an object.

[FIG. 9A] FIG. 9A is a diagram explaining a method for converting from cylindrical coordinates (world coordinates) to a visual field (local coordinates).

[FIG. 9B] FIG. 9B is a diagram explaining a method for converting from cylindrical coordinates (world coordinates) to a visual field (local coordinates).

[FIG. 10A] FIG. 10A is a schematic diagram explaining a face blur correction function in the above-described head mounted display.

[FIG. 10B] FIG. 10B is a schematic diagram explaining a face blur correction function in the above-described head mounted display.

[FIG. 11A] FIG. 11A is a schematic diagram illustrating relative positional relationship between an object associated with cylindrical coordinates for which a region is limited and a visual field.

[FIG. 11B] FIG. 11B is a schematic diagram illustrating relative positional relationship between an object associated with cylindrical coordinates for which a region is limited and a visual field.

[FIG. 12A] FIG. 12A is a schematic diagram explaining procedure for placing an object on the cylindrical coordinates for which a region is limited.

[FIG. 12B] FIG. 12B is a schematic diagram explaining procedure for placing an object on the cylindrical coordinates for which a region is limited.

[FIG. 13] FIG. 13 is a sequence diagram explaining procedure for placing an object on the cylindrical coordinates for which a region is limited.

[FIG. 14] FIG. 14 is a flowchart explaining outline of operation of the above-described system.

[FIG. 15] FIG. 15 is a flowchart illustrating an example of procedure for receiving object data by the above-described control unit.

[FIG. 16] FIG. 16 is a flowchart illustrating an example of procedure for drawing an object in a visual field by the above-described control unit.

[FIG. 17] FIG. 17 is a diagram illustrating an example of a yaw angle, a pitch angle, and a roll angle.

[FIG. 18] FIG. 18 is a diagram for explaining an example in which a position and an orientation of an AR object with respect to a visual field of a user are dependent on the roll angle.

[FIG. 19A] FIG. 19A is a diagram for explaining an example of a scene in which a roll angle-dependent mode is suitable.

[FIG. 19B] FIG. 19B is a diagram for explaining another example of a scene in which the roll angle-dependent mode is suitable.

[FIG. 20] FIG. 20 is a diagram for explaining an example in which a position and an orientation of an AR object with respect to a visual field of a user are not dependent on the roll angle.

[FIG. 21] FIG. 21 is a diagram for explaining an example of a scene in which a roll angle-independent mode is suitable.

[FIG. 22] FIG. 22 is a diagram for explaining retrieval performance of an AR object, in the case where a display mode of the AR object is roll angle-dependent.

[FIG. 23] FIG. 23 is a diagram for explaining retrieval performance of an AR object, in the case where a display mode of the AR object is roll angle-independent.

[FIG. 24] FIG. 24 is a diagram for explaining an example of a mode of limiting rotation of an AR object in accordance with a situation, in the case where a display mode of the AR object is roll angle-dependent.

[FIG. 25] FIG. 25 is a diagram for explaining a detailed example of a mode of limiting rotation of an AR object in accordance with a situation, in the case where a display mode of the AR object is roll angle-dependent.

[FIG. 26] FIG. 26 is a diagram for explaining a case in which a function of limiting a visual field region is combined with the roll angle-independent mode.

[FIG. 27] FIG. 27 is a diagram for explaining in detail a case in which a function of limiting a visual field region is combined with the roll angle-independent mode.

[FIG. 28] FIG. 28 is a diagram for explaining a display example of an AR object in the case where the roll angle exceeds a roll limiting angle in the roll angle-dependent mode.

[FIG. 29] FIG. 29 is a diagram for explaining an example in which an orientation of an AR object is dependent on the roll angle, in the case where a display mode of the AR object is roll angle-independent.

[FIG. 30] FIG. 30 is a diagram for explaining a detailed example in which an orientation of an AR object with respect to a visual field of a user is not dependent on the roll angle, in the case where a display mode of the AR object is roll angle-independent.

[FIG. 31] FIG. 31 is a diagram for explaining an example of updating a roll limiting angle.

[FIG. 32] FIG. 32 is a flowchart illustrating an example of operation of drawing an AR object.

[FIG. 33] FIG. 33 is a flowchart illustrating another example of operation of drawing an AR object.

[FIG. 34] FIG. 34 is a diagram illustrating a display example of an AR object in the case where a display mode of the AR object is roll angle-dependent.

[FIG. 35] FIG. 35 is a diagram illustrating a display example of an AR object in the case where a display mode of the AR object is roll angle-independent.

[FIG. 36] FIG. 36 is a diagram illustrating a display example of an AR object in the case where the AR object is a two-dimensional image and a display example of the AR object in the case where the AR object is a three-dimensional object.

[FIG. 37] FIG. 37 is a diagram illustrating a detailed display example of the case where an AR object is a three-dimensional object.

[FIG. 38] FIG. 38 is a diagram illustrating a detailed display example of the case where an AR object is a two-dimensional image.

[FIG. 39] FIG. 39 is a flowchart illustrating an example of operation of updating an AR object.

[FIG. 40] FIG. 40 is a flowchart illustrating a basic example of operation of drawing an AR object.

[FIG. 41] FIG. 41 is a diagram illustrating an example of providing both an AR object and a non-AR object to a visual field of a user.

[FIG. 42] FIG. 42 is a diagram illustrating another example of providing both an AR object and a non-AR object to a visual field of a user.

Mode(s) for Carrying Out the Invention

Embodiments according to the present technology will be described below with reference to the drawings. In the present embodiment, an example will be described where the present technology is applied to a head mounted display as an image display apparatus.

<First Embodiment>

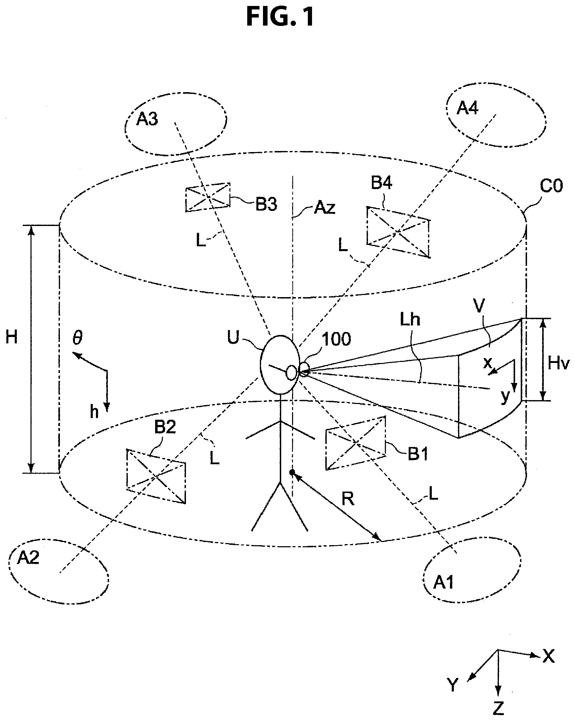

FIG. 1 is a schematic diagram explaining functions of the head mounted display (hereinafter, referred to as an "HMD") according to an embodiment of the present technology. First, outline of basic functions of the HMD according to the present embodiment will be described with reference to FIG. 1.

Here, in FIG. 1, an X axis direction and a Y axis direction indicate horizontal directions which are orthogonal to each other, and a Z axis direction indicates a vertical axis direction. The XYZ orthogonal coordinate system indicates a coordinate system (real three-dimensional coordinate system) of real space to which the user belongs, an arrow on the X axis indicates a northward direction, and an arrow on the Y axis indicates an eastward direction. Further, an arrow on the Z axis indicates a gravity direction.

[Outline of functions of HMD]

The HMD 100 of the present embodiment is worn on the head of a user U, and is configured to be able to display a virtual image in a visual field V (display visual field) of the user U in real space. The image displayed in the visual field V includes information relating to predetermined subjects A1, A2, A3 and A4 existing in the visual field V. The predetermined subjects correspond to, for example, the landscape, stores, goods, or the like, existing around the user U.

The HMD 100 stores in advance images (hereinafter, also referred to as objects) B1, B2, B3 and B4 associated with a virtual world coordinate system surrounding the user U who wears the HMD. The world coordinate system is a coordinate system equivalent to real space to which the user belongs, and defines positions of the subjects A1 to A4 using a position of the user U and a predetermined axial direction as references. While, in the present embodiment, cylindrical coordinates C0 in which a vertical axis is made an axial center is employed as the world coordinates, other three-dimensional coordinates such as celestial coordinates centered on the user U may be also employed.

A radius R and height H of the cylindrical coordinates C0 can be arbitrarily set. While the radius R is set shorter than distances from the user to the subjects A1 to A4 here, the radius R may be longer than the above-described distances. Further, the height H is set equal to or greater than height (length in a longitudinal direction) Hv of a visual field V of the user U provided through the HMD 100.

The objects B1 to B4 which are images displaying information relating to the subjects A1 to A4 existing in the world coordinate system, may be images including characters, pictures, or the like, or may be animation images. Further, the objects may be two-dimensional images or three-dimensional images. Still further, the shape of the objects may be rectangular, circular or other geometric shapes, and can be set as appropriate according to types of the objects.

The coordinate positions of the objects B1 to B4 on the cylindrical coordinates C0 are respectively associated with, for example, intersections of eye lines L of the user who gazes at the subjects A1 to A4 and the cylindrical coordinates C0. While, in the illustrated example, respective center positions of the objects B1 to B4 are made to match the above-described intersections, the positions are not limited to this, and part of the circumferences of the objects (for example, part of four corners) may be made to match the above-described intersections. Alternatively, the coordinate positions of the objects B1 to B4 may be associated with arbitrary positions distant from the above-described intersections.

The cylindrical coordinates C0 has a coordinate axis ($\theta$) in a circumferential direction indicating an angle around a vertical axis assuming that the northward direction is 0°, and a coordinate axis (h) in a height direction indicating an angle in a vertical direction using an eye line Lh of the user U in the horizontal direction as a reference. On the coordinate axis ($\theta$), an eastward direction is set as a positive direction, and on the coordinate axis (h), a depression angle is set as a positive direction, and an elevation angle is set as a negative direction.

As will be described later, the HMD 100 includes a detecting unit for detecting a viewpoint direction of the user U, and determines to which region on the cylindrical coordinates C0 the visual field V of the user U corresponds based on output of the detecting unit. In the case where one of the objects (for example, the object B1) exists in the corresponding region of the xy coordinate system which forms the visual field V, the HMD 100 displays (draws) the object B1 in the above-described corresponding region.

As described above, the HMD 100 of the present embodiment provides information relating to the subject A1 to the user U by displaying the object B1 in the visual field V while superimposing the object B1 on the subject A1 in real space. Further, the HMD 100 can provide the objects (B1 to B4) relating to the predetermined subjects A1 to A4 to the user U in accordance with orientation or direction of a viewpoint of the user U.

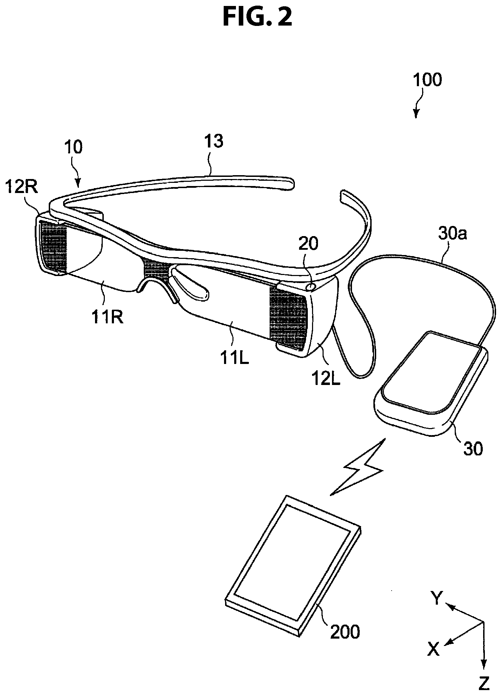

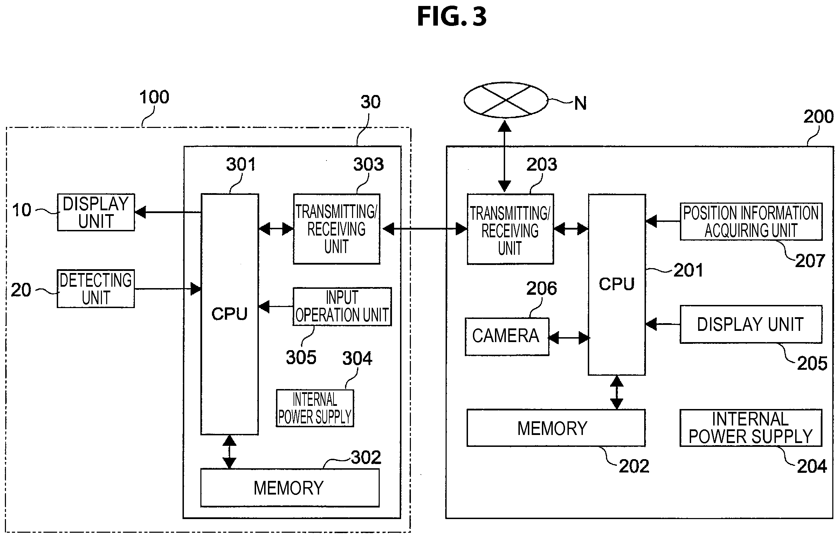

Subsequently, details of the HMD 100 will be described. FIG. 2 is an overall view illustrating the HMD 100, and FIG. 3 is a block diagram illustrating the configuration of the HMD 100.

[Configuration of HMD]

The HMD 100 includes a display unit 10, a detecting unit 20 configured to detect posture of the display unit 10, and a control unit 30 configured to control driving of the display unit 10. In the present embodiment, the HMD 100 is configured as a see-through type HMD which can provide the visual field V in real space to the user.

(Display unit)

The display unit 10 is configured to be able to be worn on the head of the user U. The display unit 10 includes first and second display faces 11R and 11 L, first and second image generating units 12R and 12L and a support body 13.

The first and second display faces 11 R and 11L are formed with optical elements having transparency which can provide real space (external visual field) respectively to the right eye and the left eye of the user U. The first and second image generating units 12R and 12L are configured to be able to generate images presented to the user U respectively via the first and the second display faces 11R and 11L. The support body 13 supports the display faces 11R and 11L and the image generating units 12R and 12L and has an appropriate shape which allows the display unit 10 to be worn on the head of the user so that the first and the second display faces 11L and 11R respectively face the right eye and the left eye of the user U.

The display unit 10 configured as described above is configured to be able to provide the visual field V in which a predetermined image (or a virtual image) is superimposed on the real space to the user U through the display faces 11R and 11L. In this case, the cylindrical coordinates C0 for the right eye and the cylindrical coordinates C0 for the left eye are set, and objects drawn on the respective cylindrical coordinates are projected on the display faces 11R and 11 L.

(Detecting unit)

The detecting unit 20 is configured to be able to detect orientation or posture change of the display unit 10 around at least one axis. In the present embodiment, the detecting unit 20 is configured to detect orientation or posture change of the display unit 10 around the X, Y and Z axes.

Here, the orientation of the display unit 10 typically means a front direction of the display unit. In the present embodiment, the orientation of the display unit 10 is defined as orientation of the face of the user U.

The detecting unit 20 can be configured with a motion sensor such as an angular velocity sensor and an acceleration sensor, or combination of these sensors. In this case, the detecting unit 20 may be configured with a sensor unit in which each of the angular velocity sensor and the acceleration sensor is disposed in a triaxial direction or sensor to be used may be made different in accordance with axes. For example, an integral value of output of the angular velocity sensor can be used for posture change, a direction of the change, an amount of the change, or the like, of the display unit 10.

Further, a geomagnetic sensor can be employed for detection of the orientation of the display unit 10 around the vertical axis (Z axis). Alternatively, the geomagnetic sensor and the above-described motion sensor may be combined. By this means, it is possible to detect orientation or posture change with high accuracy.

The detecting unit 20 is disposed at an appropriate position of the display unit 10. The position of the detecting unit 20 is not particularly limited, and, for example, the detecting unit 20 is disposed at one of the image generating units 12R and 12L or at part of the support body 13.

(Control unit)

The control unit 30 (first control unit) generates a control signal for controlling driving of the display unit 10 (the image generating units 12R and 12L) based on the output of the detecting unit 20. In the present embodiment, the control unit 30 is electrically connected to the display unit 10 via a connection cable 30a. Of course, the connection is not limited to this, and the control unit 30 may be connected to the display unit 10 through a radio communication line.

As illustrated in FIG. 3, the control unit 30 includes a CPU 301, a memory 302 (storage unit), a transmitting/receiving unit 303, an internal power supply 304 and an input operation unit 305.

The CPU 301 controls the whole operation of the HMD 100. The memory 302 includes a read only memory (ROM), a random access memory (RAM), or the like, and stores a program or various kinds of parameters for the CPU 301 to control the HMD 100, an image (object) to be displayed at the display unit 10 and other required data. The transmitting/receiving unit 303 includes an interface for communication with a mobile information terminal 200 which will be described later. The internal power supply 304 supplies power required for driving the HMD 100.

The input operation unit 305 is provided to control an image to be displayed at the display unit 10 through user operation. The input operation unit 305 may be configured with a mechanical switch or may be configured with a touch sensor. The input operation unit 305 may be provided at the display unit 10.

The HMD 100 may further include an acoustic output unit such as a speaker, a camera, or the like. In this case, the above-described sound output unit and the camera are typically provided at the display unit 10. Further, a display device which displays an input operation screen, or the like, of the display unit 10 may be provided at the control unit 30. In this case, the input operation unit 305 may be configured with a touch panel provided at the display device.

(Mobile information terminal)

The mobile information terminal 200 (second control unit) is configured to be able to mutually communicate with the control unit 30 through a radio communication line. The mobile information terminal 200 has a function of acquiring an image to be displayed at the display unit 10 and a function of transmitting the acquired image to the control unit 30. The mobile information terminal 200 constructs an HMD system by being organically combined with the HMD 100.

While the mobile information terminal 200 is carried by the user U who wears the display unit 10, and is configured with an information processing apparatus such as a personal computer (PC), a smartphone, a mobile telephone, a tablet PC and a personal digital assistant (PDA), the mobile information terminal 200 may be a terminal apparatus dedicated for the HMD 100.

As illustrated in FIG. 3, the mobile information terminal 200 includes a CPU 201, a memory 202, a transmitting/receiving unit 203, an internal power supply 204, a display unit 205, a camera 206 and a position information acquiring unit 207.

The CPU 201 controls the whole operation of the mobile information terminal 200. The memory 202 includes a ROM, a RAM, or the like, and stores a program and various kinds of parameters for the CPU 201 to control the mobile information terminal 200, an image (object) to be transmitted to the control unit 30 and other required data. The internal power supply 204 supplies power required for driving the mobile information terminal 200.

The transmitting/receiving unit 203 communicates with a server N, a control unit 30, other nearby mobile information terminals, or the like, using wireless LAN (such as IEEE 802.11) such as wireless fidelity (WiFi) or a network of 3G or 4G for mobile communication. The mobile information terminal 200 downloads an image (object) to be transmitted to the control unit 30 or application for displaying the image from the server N via the transmitting/receiving unit 203 and stores the image in the memory 202.

The server N is typically configured with a computer including a CPU, a memory, or the like, and transmits predetermined information to the mobile information terminal 200 in response to a request from the user U or automatically regardless of intention of the user U.

The display unit 205 which is configured with, for example, an LCD and an OLED, displays various kinds of menus, a GUI of application, or the like. Typically, the display unit 205 is integrated with a touch panel and can accept touch operation of the user. The mobile information terminal 200 is configured to be able to input a predetermined operation signal to the control unit 30 through touch operation on the display unit 205.

The position information acquiring unit 207 typically includes a global positioning system (GPS) receiver. The mobile information terminal 200 is configured to be able to measure a current position (longitude, latitude and altitude) of the user U (display unit 10) using the position information acquiring unit 207 and acquire a necessary image (object) from the server N. That is, the server N acquires information relating to the current position of the user and transmits image data, application software, or the like, to the mobile information terminal 200 according to the position information.

(Details of control unit)

Details of the control unit 30 will be described next.

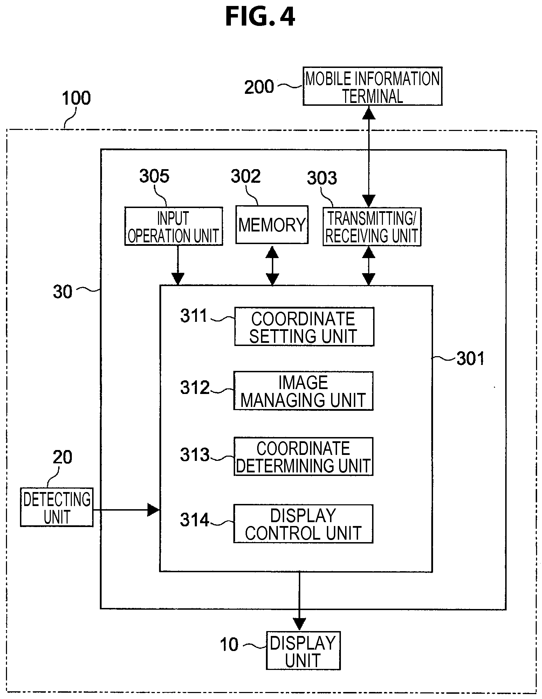

FIG. 4 is a functional block diagram of the CPU 301. The CPU 301 includes a coordinate setting unit 311, an image managing unit 312, a coordinate determining unit 313 and a display control unit 314. The CPU 301 executes processing at the coordinate setting unit 311, the image managing unit 312, the coordinate determining unit 313 and the display control unit 314 according to a program stored in the memory 302.

The coordinate setting unit 311 is configured to execute processing of setting three-dimensional coordinates surrounding the user U (display unit 10). In this example, cylindrical coordinates C0 (see FIG. 1) centered on a vertical axis Az is used as the above-described three-dimensional coordinates. The coordinate setting unit 311 sets the radius R and the height H of the cylindrical coordinates C0. The coordinate setting unit 311 typically sets the radius R and the height H of the cylindrical coordinates C0 in accordance with the number, types, or the like, of objects to be presented to the user U.

While the radius R of the cylindrical coordinates C0 may be a fixed value, the radius R of the cylindrical coordinates C0 may be a variable value which can be arbitrarily set in accordance with the size (pixel size) of the image to be displayed, or the like. The height H of the cylindrical coordinates C0 is set at a size, for example, between the same size as the height Hv and three times of the height Hv (see FIG. 1) in the longitudinal direction (vertical direction) of the visual field V to be provided to the user U by the display unit 10. An upper limit of the height H is not limited to three times of Hv and may exceed three times of Hv.

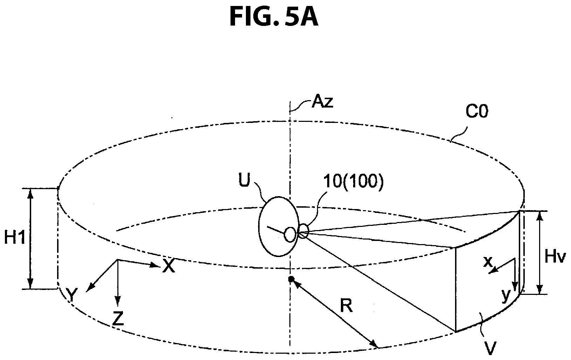

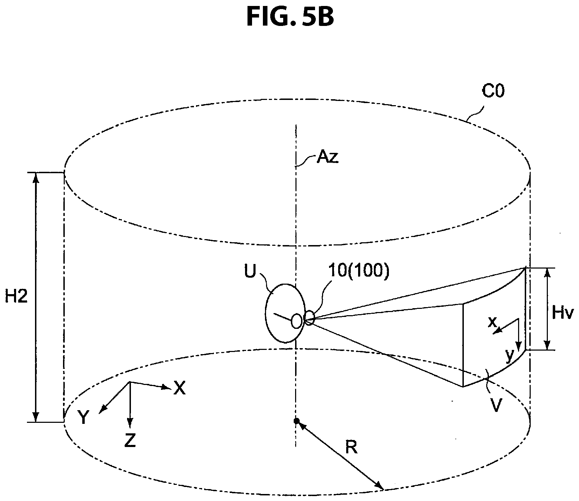

FIG. 5A illustrates cylindrical coordinates C0 having the same height H1 as the height Hv of the visual field V. FIG. 5B illustrates cylindrical coordinates C0 having the height H2 three times of the height Hv of the visual field V.

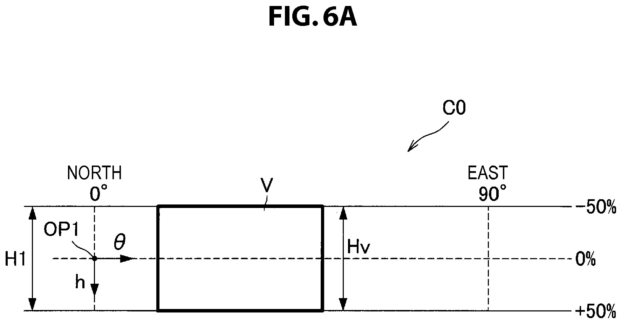

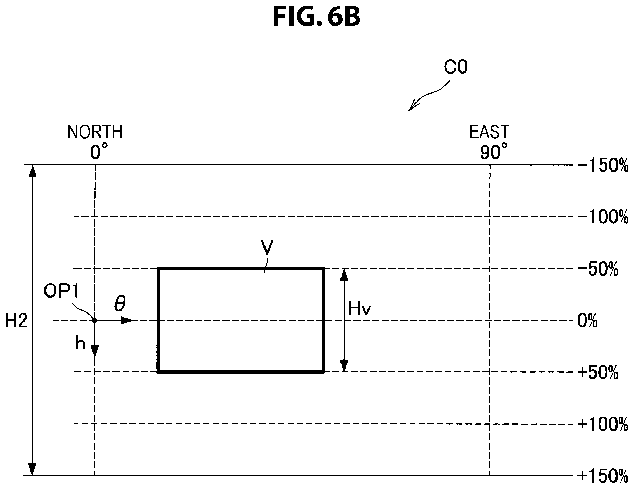

FIG. 6A and FIG. 6B are pattern diagrams illustrating the developed cylindrical coordinates C0. As described above, the cylindrical coordinates C0 has a coordinate axis (θ) in a circumferential direction indicating an angle around a vertical axis assuming that the northward direction is 0°, and a coordinate axis (h) in a height direction indicating an angle in a vertical direction using the eye line Lh of the user U in the horizontal direction as a reference. On the coordinate axis (θ), the eastward direction is set as a positive direction, and on the coordinate axis (h), a depression angle is set as a positive direction and an elevation angle is set as a negative direction. The height h indicates a size assuming that the size of the height Hv of the visual field V is 100%, and an origin OP1 of the cylindrical coordinates C0 is set at an intersection of orientation (0°) in the northward direction and the eye line Lh (h = 0%) of the user U in the horizontal direction.

The coordinate setting unit 311 has a function as a region limiting unit which can limit a display region along one axial direction of the visual field V on the three-dimensional coordinate surrounding the display unit 10. In the present embodiment, the coordinate setting unit 311 limits a visual field region (Hv) in the height direction of the visual field V on the cylindrical coordinates C0 surrounding the display unit 10. Specifically, the coordinate setting unit 311 limits the height (H) of the cylindrical coordinates in accordance with the region in the height direction of the visual field V in the case where a specified value of the height (H) is greater than the height Hv of the visual field V. Further, the coordinate setting unit 311, for example, limits the height of the cylindrical coordinates from H2 (FIG. 5B) to H1 (FIG. 5A) in accordance with operation by the user U. Note that, as shown in FIG. 5A and FIG. 6A, in the case where the height (H1) of the cylindrical coordinates is the same as the height of the visual field V, an image (object) seen in the elevation angle of -90° to +90° becomes the same as an image (object) seen in the elevation angle (pitch angle) of 0°, and thus, retrieval performance and visibility of the image (object) may be improved. In this case, the image (object) may be seen with less awkwardness in the elevation angle of -60° to +60°. Further, as shown in FIG. 5B and FIG. 6B, in the case where the height (H) of the cylinder is three times the height of the visual field V, it may be that the image (object) moves up to the elevation angle in which the upper side of the visual field V reaches the height (H2) of the cylinder, and, from the elevation angle exceeding above, the image (object) that is the same as that at the time at which the upper side of the visual field V reaches the height (H2) of the cylinder can be seen.

The image managing unit 312 has a function of managing an image stored in the memory 302, and is configured to, for example, store one or a plurality of images to be displayed via the display unit 10 in the memory 302 and execute processing of selectively deleting an image stored in the memory 302. The image stored in the memory 302 is transmitted from the mobile information terminal 200. Further, the image managing unit 312 requests transmission of the image to the mobile information terminal 200 via the transmitting/receiving unit 303.

The memory 302 is configured to be able to store one or a plurality of images (objects) to be displayed in the visual field V in association with the cylindrical coordinates C0. That is, the memory 302 stores individual objects B1 to B4 on the cylindrical coordinates C0 illustrated in FIG. 1 along with the coordinate positions on the cylindrical coordinates C0.

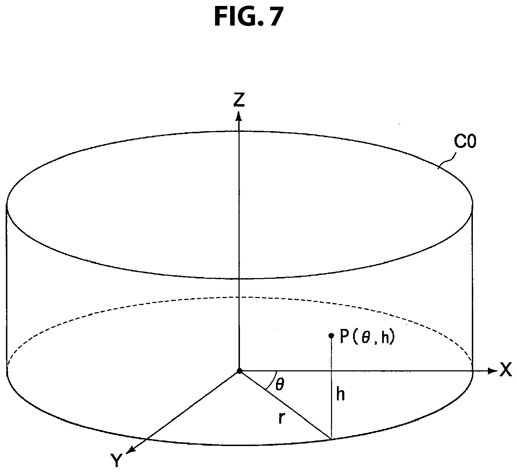

As illustrated in FIG. 7, the cylindrical coordinate system $(\theta, h)$ and the orthogonal coordinate system $(X, Y, Z)$ have relationship of $X = r\cos\theta$, $Y = r\sin\theta$, $Z = h$. As illustrated in FIG. 1, the individual objects B1 to B4 to be displayed according to the orientation or the posture of the visual field V occupy specific coordinate regions on the cylindrical coordinates C0, and are stored in the memory 302 along with specific coordinate positions $P(\theta, h)$ within the regions.

The coordinates $(\theta, h)$ of the objects B1 to B4 on the cylindrical coordinates C0 are associated with the coordinates of the cylindrical coordinate system at the intersections of lines connecting the positions of the subjects A1 to A4 respectively defined in the orthogonal coordinate system $(X, Y, Z)$ and the position of the user, and a cylindrical face of the cylindrical coordinates C0. That is, the coordinates of the objects B1 to B4 respectively correspond to the coordinates of the subjects A1 to A4 which are converted from real three-dimensional coordinates to the cylindrical coordinates C0. Such coordinate conversion of the objects are, for example, executed at the image managing unit 312, and the respective objects are stored in the memory 302 along with the coordinate positions. By employing the cylindrical coordinates C0 as the world coordinate system, it is possible to draw the objects B1 to B4 in a plane manner.

The coordinate positions of the objects B1 to B4 may be set at any position within display regions of the objects B1 to B4, and one specific point (for example, a central position) may be set for one object, or two or more points (for example, two diagonal points or points at four corners) may be set for one object.

Further, as illustrated in FIG. 1, in the case where the coordinate positions of the objects B1 to B4 are associated with intersections of eye lines L of the user who gazes at the subjects A1 to A4 and the cylindrical coordinates C0, the user U views the objects B1 to B4 at the positions where the objects B1 to B4 overlap with the subjects A1 to A4. Instead, it is also possible to associate the coordinate positions of the objects B1 to B4 with arbitrary positions distant from the above-described intersections. By this means, it is possible to display or draw the objects B1 to B4 at desired positions with respect to the subjects A1 to A4.

The coordinate determining unit 313 is configured to execute processing of determining to which region on the cylindrical coordinates C0 the visual field V of the user U corresponds based on the output of the detecting unit 20. That is, the visual field V moves on the cylindrical coordinates C0 according to posture change of the user U (display unit 10), and the moving direction and the moving amount are calculated based on the output of the detecting unit 20. The coordinate determining unit 313 calculates the moving direction and the moving amount of the display unit 10 based on the output of the detecting unit 20 and determines to which region on the cylindrical coordinates C0 the visual field V belongs.

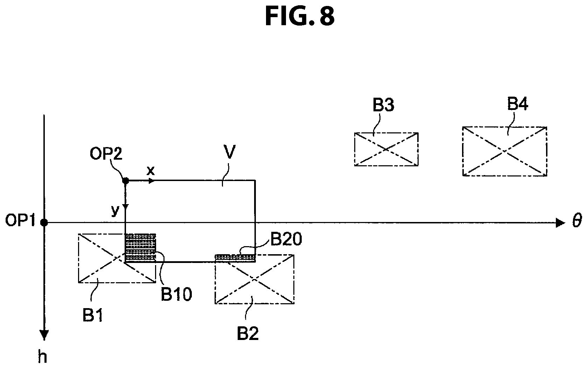

FIG. 8 is a development diagram of the cylindrical coordinates C0 schematically illustrating relationship between the visual field V on the cylindrical coordinates C0 and the objects B1 to B4. The visual field V has a substantially rectangular shape, and has xy coordinates (local coordinates) in which an upper left corner part is set as an origin OP2. The x axis is an axis extending from the origin OP2 in the horizontal direction, and the y axis is an axis extending from the origin OP2 in the vertical direction. The coordinate determining unit 313 is configured to execute processing of determining whether or not one of the objects B1 to B4 exists in the corresponding region of the visual field V.

The display control unit 314 is configured to execute processing of displaying (drawing) the objects on the cylindrical coordinates C0 corresponding to the orientation of the display unit 10 in the visual field V based on the output of the detecting unit 20 (that is, a determination result of the coordinate determining unit 313). For example, as illustrated in FIG. 8, in the case where current orientation of the visual field V overlaps with each of the display regions of the objects B1 and B2 on the cylindrical coordinates C0, images corresponding to the overlapped regions B10 and B20 are displayed in the visual field V (local rendering).

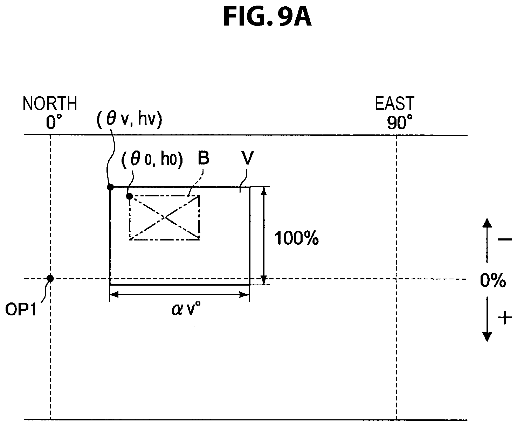

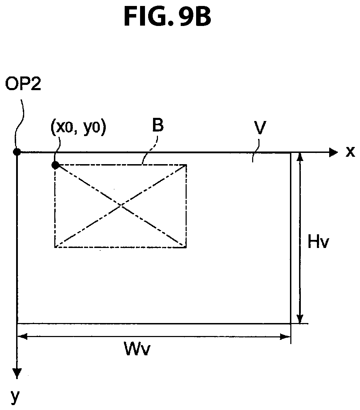

FIG. 9A and FIG. 9B are diagrams explaining a method for converting from the cylindrical coordinates C0 (world coordinates) to the visual field V (local coordinates).

As illustrated in FIG. 9A, coordinates of a reference point of the visual field V on the cylindrical coordinates C0 are set at $(\theta v, hv)$, and coordinates of a reference point of the object B located within the region of the visual field V are set at $(\theta 0, h0)$. The reference points of the visual field V and the object B may be set at any point, and, in this example, the reference points are set at upper left corner parts of the visual field V and the object B which have a rectangular shape. $\alpha v[°]$ is a width angle of the visual field V on the world coordinates, and the value of $\alpha v[°]$ is determined according to design or specifications of the display unit 10.

The display control unit 314 decides a display position of the object B in the visual field V by converting the cylindrical coordinate system $(\theta, h)$ into the local coordinate system $(x, y)$. As illustrated in FIG. 9B, in the case where the height and width of the visual field V in the local coordinate system are respectively set at Hv and Wv, and the coordinates of the reference point of the object B in the local coordinate system (x, y) are set at (x0, y0), a conversion equation can be expressed as follows:

$$x0 = (\theta 0 - \theta v) \cdot Wv / \alpha v \dots (1)$$

$$y0 = (h0 - hv) \cdot Hv / 100 \dots (2)$$

The display control unit 314 typically changes the display position of the object B within the visual field V by following change of the orientation or the posture of the display unit 10. This control is continued as long as at least part of the object B exists in the visual field V.

On the other hand, in recent years, in accordance with downsizing of the HMD, a display region of the HMD tends to be narrow. Further, in a see-through type head mounted display, for example, there is a case where it is desired to limit an information display region while securing a see-through region. In such a case, if the display position of the object B changes within the visual field V by following change of the orientation or the posture of the display unit 10 as described above, there is a case where it is difficult to maintain a state where the object B enters the visual field V. To solve such a problem, the HMD 100 of the present embodiment has an object display fixing function as will be described below.

<Object display fixing function>

(1) Introduction of Non-strict attribute

The display control unit 314 is configured to, in the case where the orientation or the posture of the display unit 10 changes by a predetermined angle or greater, move the object within the visual field V in accordance with the above-described change of the orientation or the posture, and, in the case where the above-described change of the orientation or the posture is less than the above-described predetermined angle, be able to execute processing of fixing the display position of the object in the visual field V.

In the present embodiment, a non-strict attribute may be introduced to the object. That is, the object B is not fixed at one location in the world coordinate system (cylindrical coordinates C0), but, in the case where a viewing direction of the user U is within a certain angular range, the object may be fixed and displayed in the local coordinate system (x, y) of the display unit 10. By executing such processing, it is possible to easily maintain a state where the object falls within the visual field V. Therefore, it is possible to restrict movement of the object caused by unnecessary change of the posture of the user U around the vertical axis or the horizontal axis, so that it is possible to improve visibility of the object.

The above-described predetermined angle may be an angle around the vertical axis (Z axis) or an angle around the horizontal axis (the X axis and/or the Y axis), or both angles. The value of the above-described predetermined angle can be set as appropriate, and is, for example, ±15°. The above-described predetermined angle may be the same between the angle around the vertical axis (first predetermined angle) and the angle around the horizontal axis (second predetermined angle) or may be different between the first predetermined angle and the second predetermined angle.

(2) First grab function

The display control unit 314 is configured to be able to execute processing of moving the object B to a predetermined position in the visual field V in the case where output change of the detecting unit 20 is equal to or less than a predetermined amount over a predetermined period.

In the present embodiment, because it is highly likely that the user refers to the object displayed in the visual field V in the case where output of the detecting unit 20 does not change over a predetermined period, visibility of the object may be improved by moving the object to a predetermined position in the visual field V.

The above-described predetermined period is not particularly limited, and is, for example, set at approximately 5 seconds. The above-described predetermined position is not particularly limited, and is, for example, set at a central part or a corner part of the visual field V or a position displaced to any direction of upper, lower, right and left directions. Further, the moved object may be displayed while being exaggerated by, for example, being enlarged.

This function may be used to fix and display the object B at a predetermined position in the local coordinate system (x, y) of the visual field V in the case where, for example, output change of the detecting unit 20 is not recognized for a predetermined period while the object is located at the center of the visual field V. In this case, in the case where the output of the detecting unit 20 exceeds a predetermined value, the object display fixing function is cancelled. In this event, the output value of the detecting unit 20 may be an output change amount corresponding to the above-described posture change of equal to or more than the predetermined angle of the display unit 10 around the predetermined axis, or may be other output change amounts.

(3) Second grab function

The display control unit 314 is configured to be able to execute processing of moving the object to a predetermined position in the visual field V in the case where input of a predetermined signal generated through operation of the user U is detected. Also in such a configuration, as with the above-described case, it is possible to improve visibility of the object and control display of an image according to intention of the user.

In this processing, by, for example, predetermined input operation to the input operation unit 305 or the mobile information terminal 200 being performed while the object is fit to the center of the visual field V, the object is fixed at the local coordinate system (x, y) of the visual field V. Further, by operation to the input operation unit 305, or the like, being performed again, the object returns to the world coordinate system, and the object display fixing function is cancelled.

(4) Face blur correction function

The display control unit 314 is configured to be able to execute processing of, in the case where output change of the detecting unit 20 is equal to or higher than a predetermined frequency while the object is displayed at a predetermined position in the visual field V, disabling frequency components equal to or higher than the above-described predetermined frequency among the output of the detecting unit 20.

In the case where the object within the visual field V moves by following the change of the orientation or the posture of the display unit 10, there is a case where the object also follows fine blur of the face of the user U, which may degrade visibility of the object. To prevent this problem, it is also possible to prevent the object from following the posture change of the display unit 10 for frequency components equal to or higher than a predetermined frequency and fix the display position of the object in the visual field V (local coordinate system) for low frequency components lower than the predetermined frequency. As the above-described predetermined frequency, for example, a frequency corresponding to face blur of the user is set. By this means, it is possible to secure visibility of an image without being affected by fine face blur of the user.

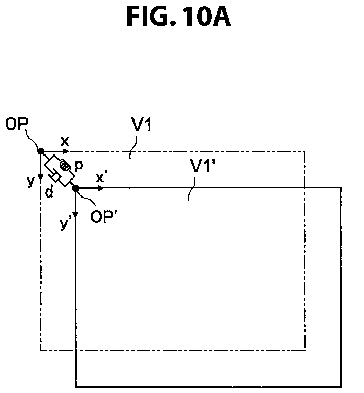

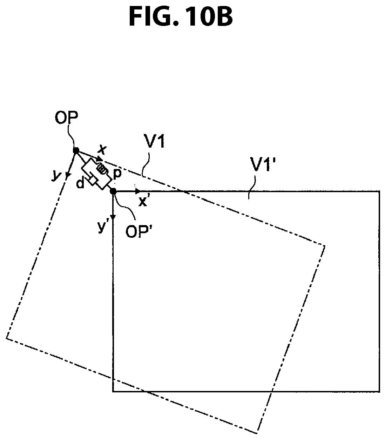

FIG. 10A and FIG. 10B are schematic diagrams explaining the face blur correction function. In the drawings, V1 indicates a local coordinate system at a certain time point, and V2 indicates a face blur correction coordinate system corresponding to V1. OP and OP' indicate origins of V1 and V2.

In the case where the face blur correction function is effective, an object is placed on the face blur correction coordinate system. The face blur correction coordinate system is followed and controlled by PD control with respect to the local coordinate system (x, y) of the visual field V. The PD control is a type of feedback control and, typically, refers to control for performing convergence to a set value by combining proportional control and differential control. In FIG. 10A and FIG. 10B, among a spring (p) and a damper (d) connected between the visual field V and the visual field V', the spring (p) corresponds to a P component of the PD control, and the damper (d) corresponds to a D component of the PD control.

As an example of a method for calculating following control, it is assumed that a point in the local coordinate system V1 at a certain time point t is (x(t), y(t)), and a point of the face blur correction coordinate system V2 corresponding to the point is (x'(t), y'(t)). Further, it is assumed that a point of the local coordinate system V1 before a sample cycle (Δt) is (x(t-Δt), y(t-Δt)), and a point of the face blur correction coordinate system V2 corresponding to the point is (x'(t-Δt), y'(t-Δt)). Assuming that a difference between the corresponding points is (Δx(t), Δy(t)), they can be expressed as follows:

$$\Delta x(t) = x'(t) - x(t) \ldots (3)$$

$$\Delta y(t) = y'(t) - y(t) \ldots (4)$$

Assuming that a difference in velocity between the corresponding points is (Δvx(t), Δvy(t)), they can be expressed as follows:

$$\Delta vx(t) = \{\Delta x'(t) - \Delta x'(t - \Delta t)\} - \{\Delta x(t) - \Delta x(t - \Delta t)\} \ldots (5)$$

$$\Delta vy(t) = \{\Delta y'(t) - \Delta y'(t - \Delta t)\} - \{\Delta y(t) - \Delta y(t - \Delta T)\} \ \dots \ (6)$$

At that time, an amount that the face blur correction function coordinate system V1 should follow the local coordinate system V1 and move ($\Delta p(t)$, $\Delta q(t)$) can be expressed as follows:

$$\Delta p(t) = Px \times \Delta x(t) + Dx \times \Delta vx(t) \ \dots \ (7)$$

$$\Delta q(t) = Py \times \Delta y(t) + Dy \times \Delta vy(t) \ \dots \ (8)$$

Here, Px and Py are differential gain constants with respect to x and y, and Dx and Dy are velocity gain constants with respect to x and y.

Even in the case where the local coordinate system V1 rotates, the face blur correction coordinate system V1' does not follow rotational components (FIG. 10B). That is, even in the case where the face is inclined around the axis of the anterior-posterior direction of the user, the inclination of the object is restricted.

The above-described object display fixing functions (1) to (4) may be individually applied or may be applied in combination as appropriate. For example, it is possible to apply combination of any one of the above-described (1) to (3) and the above-described (4).

<Region limiting function>

Subsequently, a region limiting function of the HMD 100 will be described.

In recent years, in the see-through type head mounted display, for example, there is a case where it is desired to limit an information display region while securing a see-through region. In this case, there is a case where an object image is difficult to enter a field of view. Therefore, in the present embodiment, a region limiting function of the world coordinate system is provided to improve retrieval performance of an object.

As described above, the coordinate setting unit 311 has a function as a region limiting unit which can limit a region (H) along the Z axis direction in the cylindrical coordinates C0 surrounding the display unit 10 in accordance with a region (Hv) in the height direction of the visual field V (see FIG. 5A). By limiting the height H of the cylindrical coordinates C0, it is possible to improve retrieval performance and visibility of an image within a horizontal visual field of the user.

A limiting amount in the height direction of the cylindrical coordinates C0 is not particularly limited, and, in the present embodiment, the height of the cylindrical coordinates C0 is limited to a height (H1) which is the same as the height Hv of the visual field V. In the case where the region limiting function is made effective, the display control unit 314 is configured to be able to display the objects B1 to B4 while changing at least h coordinates in the cylindrical coordinate system ($\theta$, h) so that the respective objects B1 to B4 are located within the cylindrical coordinates C0 for which the region is limited.

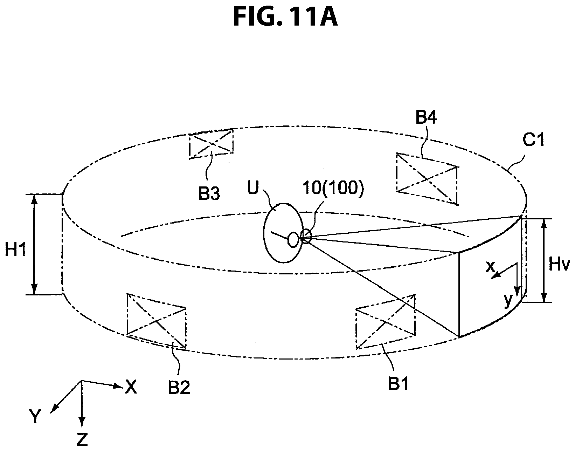

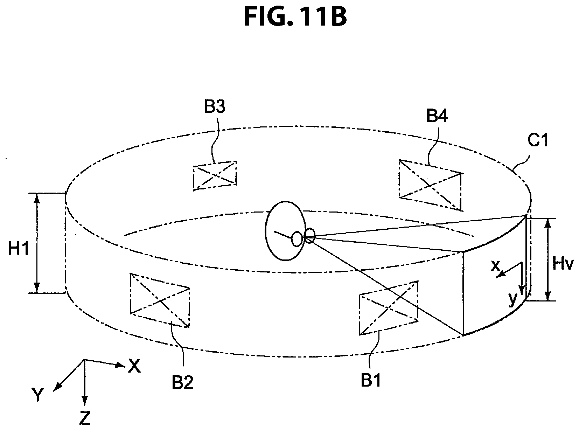

FIG. 11A and FIG. 11B are schematic diagrams illustrating relative positional relationship between the objects B1 to B4 associated with the cylindrical coordinates C1 for which the region is limited to the height H1 and the visual field V. Because the user U can view the objects B1 to B4 associated with all orientations by only changing posture around the Z axis (vertical axis), retrieval performance of the objects B1 to B4 is dramatically improved.

While, in the example of FIG. 11A, all the objects B1 to B4 are placed within the cylindrical coordinates C1, the present disclosure is not limited to this, and at least one object may be placed within the cylindrical coordinates C1 as necessary. Further, the heights of the objects B1 to B4 placed in the cylindrical coordinates C1 are not particularly limited, and can be each arbitrarily set.

Further, while, in the example of FIG. 11, the whole of the objects B1 to B4 is placed within the cylindrical coordinates C1, it is also possible to employ a configuration where at least part of the objects B1 to B4 is displayed in the visual field V. By this means, it is possible to easily recognize the image existing in given orientation. In this case, the height H1 of the cylindrical coordinates C1 can be changed to a height higher than the height H1 through input operation to the input operation unit 305, or the like, by the user U. By this means, it is possible to view the whole objects.

Whether the above-described region limiting function is made effective or ineffective can be selected through setting by the user U. In the HMD 100 of the present embodiment, a state in which the region limiting function is effective using the world coordinate system as the cylindrical coordinates C1 is set as a normal mode, and the region limiting function can be changed (for example, the height H can be changed) or the state can be switched to an ineffective state through voluntary setting change by the user.

On the other hand, the control unit 30 may be configured to be able to limit the region in the height direction on the cylindrical coordinates according to the region (Hv) of the visual field V in the height direction in the case where input of a predetermined signal generated by the operation of the user U is detected and execute processing of aligning all the objects to be displayed in the visual field V at the same height in the visual field V.

That is, in the case where the region limiting function is ineffective, or in the case where cylindrical coordinates other than the cylindrical coordinates C1 are set as the world coordinate system, the world coordinate system is forcibly switched to the cylindrical coordinates C1 through input operation to the input operation unit 305, or the like, by the user U. Further, the respective objects B1 to B4 are placed within the cylindrical coordinates C1 so that all the objects B1 to B4 are displayed at the same height in the visual field V as illustrated in FIG. 11B. By this means, it is possible to further improve visibility of an image displayed in the visual field.

<Image management function>

Subsequently, an image management function of the HMD 100 will be described.

As described above, in the present embodiment, the mobile information terminal 200 is used for transmission of object data to the control unit 30. The mobile information terminal 200 includes a position information acquiring unit 207 configured to measure the position of the user U (display unit 10), and an image acquiring unit including a transmitting/receiving unit 203 configured to be able to acquire a plurality of objects (B1 to B4) to be stored in the memory 302 of the control unit 30 from the server N, or the like.

In the present embodiment, the control unit 30 requests the mobile information terminal 200 to transmit one or more pieces of object data selected from a plurality of pieces of object data, and the mobile information terminal 200 transmits the requested object data to the control unit 30.

Here, in order to smoothly draw the objects in the visual field V of the display unit 10, communication speed between the mobile information terminal 200 and the control unit 30 and latency (a period from when transmission is requested until when an image is actually transmitted) become problems. In the present embodiment, in order to avoid the above-described problems of the communication speed and latency, the control unit 30 (in the present example, the image managing unit 312) is configured as follows.

First, the control unit 30 is configured to acquire a plurality of pieces of necessary object data from the mobile information terminal 200 in advance. By this means, a drawing timing of the object in the visual field V can be controlled at the control unit 30 side, so that it is possible to provide a necessary object to the user U at an appropriate timing regardless of a communication environment, or the like.

Further, the control unit 30 is configured to request the mobile information terminal 200 to preferentially transmit an object associated with a coordinate position closer to the display region of the visual field V on the cylindrical coordinates C0. By preferentially acquiring object data which is highly likely to be presented to the visual field V in this manner, it is possible to inhibit delay of display of the object in the visual field V.

At this time, the image managing unit 312 is configured to be able to execute processing of first setting one or a plurality of frames corresponding to the positions of the objects on the world coordinates and then placing an object with higher priority in the frame. Note that "placing a frame or an object on the world coordinates" means associating a frame or an object on the world coordinates.

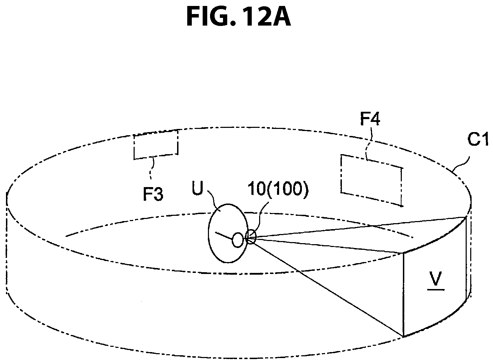

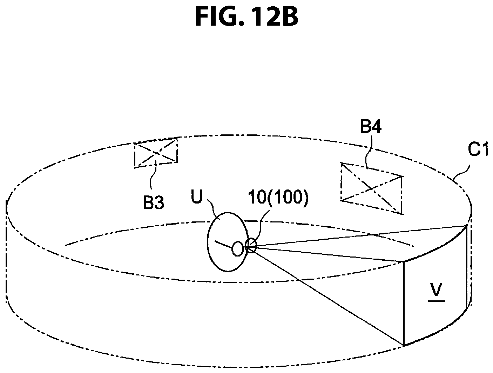

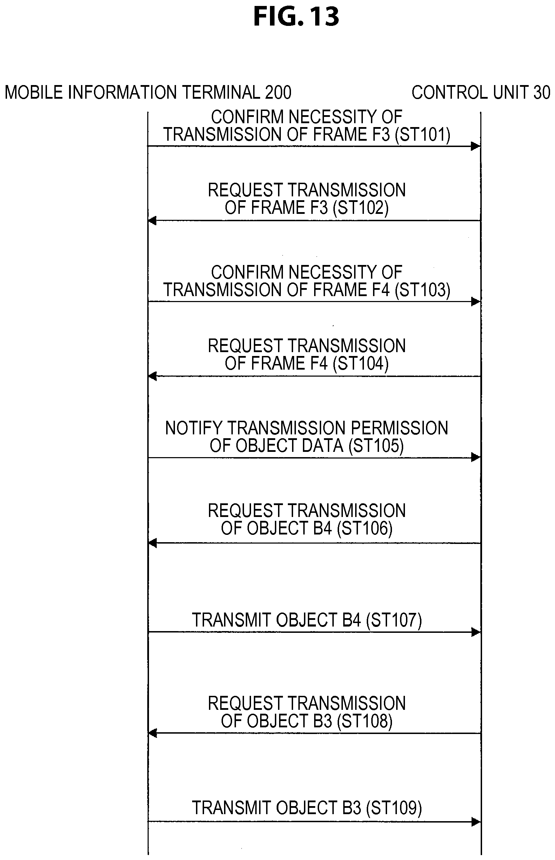

As an example, procedure of placing the objects B3 and B4 on the cylindrical coordinates C1 for which the region is limited to the height H1 is illustrated in FIG. 12A, FIG. 12B and FIG. 13. Note that the following procedure can be also applied to the cylindrical coordinates C0 for which the region is not limited or other world coordinate systems configured with three-dimensional coordinates in a similar manner. In the present embodiment, image data (object data) of the object and frame data which defines the coordinate position of the object are each transmitted to the control unit 30 from the mobile information terminal 200. Because a data amount of the frame data is smaller than a data amount of the object data, it requires less time to acquire frame data compared to object data. Therefore, communication for acquiring frame data is performed first, and, then, communication for acquiring object data is performed in order of priority.

(Frame registration phase)

First, the mobile information terminal 200 confirms necessity of transmission of a frame F3 for placing the objet B3 to the control unit 30 (step 101), and, in response to this, the control unit 30 requests the mobile information terminal 200 to transmit the frame F3 (step 102). The control unit 30 places the frame F3 at a corresponding position on the cylindrical coordinates C1 by storing the received frame F3 in the memory 302.

Subsequently, the mobile information terminal 200 confirms necessity of transmission of a frame F4 for placing the objet B4 to the control unit 30 (step 103), and, in response to this, the control unit 30 requests the mobile information terminal 200 to transmit the frame F4 (step 104). The control unit 30 places the frame F4 at a corresponding position on the cylindrical coordinates C1 by storing the received frame F4 in the memory 302. After all frame data is transmitted, the mobile information terminal 200 notifies the control unit 30 of transmission permission of the object data (step 105).

(Data acquisition phase)

The control unit 30 shifts the phase to a data acquisition phase by being triggered by transmission permission notification of the above-described object data. Specifically, for example, the control unit 30 determines a frame closest to the current orientation of the visual field V (display unit 10) (in the present example, a frame F4) based on the output of the detecting unit 20 and requests transmission of image data of the object (in the present example, the object B4) belonging to the frame (step 106). In response to this request, the mobile information terminal 200 transmits image data of the object B4 to the control unit 30 (step 107). The control unit 30 places the object B4 within the frame F4 on the cylindrical coordinates C1 by storing the received image data of the object B4 in the memory 302.

Subsequently, the control unit 30 determines a frame closest next after the frame F4 to the orientation of the visual field V (in the present example, a frame F3) and requests transmission of image data of an object (in the present example, the object B3) belonging to the frame (step 108). In response to this request, the mobile information terminal 200 transmits image data of the object B3 to the control unit 30 (step 109). The control unit 30 places the object B3 within the frame F3 on the cylindrical coordinates C1 by storing the received image data of the object B3 in the memory 302.

In this manner, the control unit 30 is configured to be able to determine priority of acquisition of the objects using the current visual field V as a reference by registering frame data of the objects in advance on the cylindrical coordinates C1 and sequentially acquire image data from an object with high priority (closest to the visual field V) based on the determination result.

Here, in the case where the object is an animation image, priorities may be set while current time and animation frame time are taken into account. For example, the control unit 30 is configured to request the mobile information terminal 200 to transmit at least part of all images configuring the animation image at one time. In this manner, also in the case where the object is an animation image, by caching images of the required number (for example, images up to 1 second later) while taking into account the frame rate, it is possible to dynamically deal with such a case.

In order to construct the system as described above, it is necessary to increase capacity of the memory 302 which holds the object data. However, by dynamically performing processing of preferentially holding object data which is highly required and discarding data which is less required, it is possible to perform appropriate object display even with an object data amount which cannot be all held. Note that the discarded data only has to be acquired again when the data becomes necessary.

That is, the control unit 30 may be configured to, for all the objects stored in the memory 302, regularly evaluate distances between the coordinate positions and the display region of the visual field V and delete an object at the coordinate position farthest from the display region of the visual field V from the memory 302. Specifically, priorities of all the objects are each evaluated based on relative positional relationship between all the objects on the cylindrical coordinates C1 and the current orientation of the visual field V, and object data with low priority is deleted. By this means, it is possible to secure a storage region for the object data close to the visual field V.

A method for evaluating priority is not particularly limited, and, for example, the priority can be evaluated based on the number of pixels between the central position of the visual field V and the central position of the object on the cylindrical coordinates C1. Further, in the case of an animation image, an evaluation value may be multiplied by a coefficient based on reproduction time.

[Operation of HMD]

An example of operation of the HMD system including the HMD 100 according to the present embodiment configured as described above will be described next.

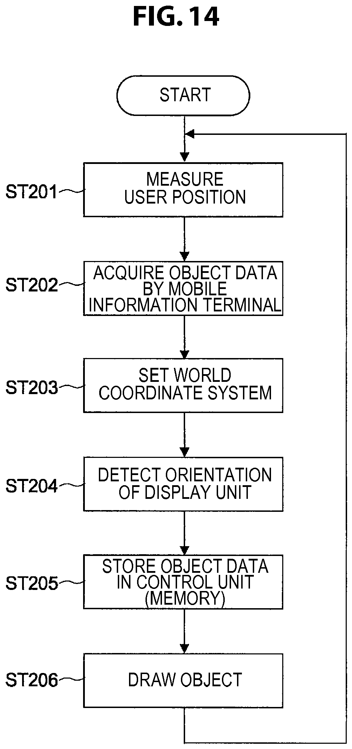

FIG. 14 is a flowchart explaining outline of operation of the HMD system according to the present embodiment.

First, the current position of the user U (display unit 10) is measured using the position information acquiring unit 207 of the mobile information terminal 200 (step 201). The position information of the display unit 10 is transmitted to the server N. Then, the mobile information terminal 200 acquires object data relating to a predetermined subject existing in real space around the user U from the server N (step 202).

Then, the mobile information terminal 200 notifies the control unit 30 that transmission of object data is ready. The control unit 30 (in the present example, the coordinate setting unit 311) sets a height (H) and a radius (R) of the cylindrical coordinates C0 as the world coordinate system in accordance with types, or the like, of the object data (step 203).

In this case, in the case where the region limiting function according to the height (Hv) of the visual field V provided by the display unit 10 is effective, the coordinate setting unit 311 sets, for example, the cylindrical coordinates C1 illustrated in FIG. 12A as the world coordinate system.

Subsequently, the control unit 30 detects the orientation of the visual field V based on the output of the detecting unit 20 (step 204), acquires object data from the mobile information terminal 200 and stores the object data in the memory 302 (step 205).

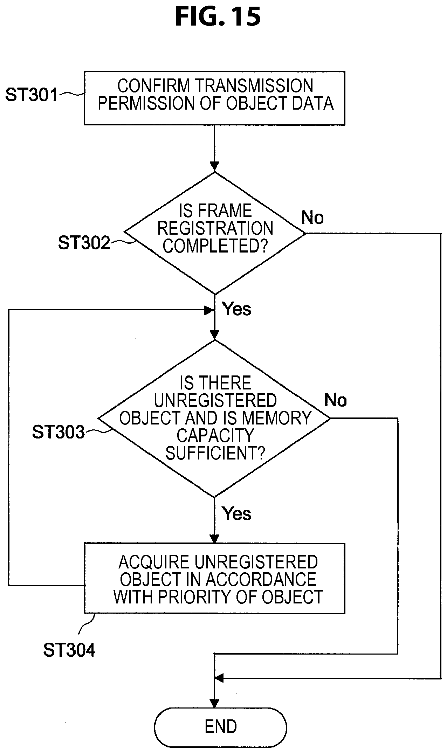

FIG. 15 is a flowchart illustrating an example of procedure for receiving object data by the control unit 30.

After transmission permission confirmation of the object data is received from the mobile information terminal 200 (step 301), the control unit 30 determines whether frame registration for all the objects is completed (step 302), because if frame registration for all the objects is not completed, the coordinate positions of the objects are not determined, and priorities of the objects cannot be evaluated. In the case where frame registration is not completed, the processing is finished, and the above-described frame registration processing for not completed frames is executed.

On the other hand, in the case where frame registration for all the objects is completed, whether or not there is an object which is not received and capacity of the memory 302 are confirmed (step 303). In the case where there is an unregistered object and memory capacity is sufficient, the unregistered object is received and stored in the memory 302 (step 304).

Note that the control unit 30 regularly evaluates priorities of objects within the memory 302 and deletes an object with a low evaluation value as necessary.

In the case where object data exists in the corresponding region of the visual field V on the cylindrical coordinates C0, the control unit 30 displays (draws) the object at the corresponding position of the visual field V through the display unit 10 (step 206). Any of the above-described object display fixing function may be applied upon display of the object in the visual field V.

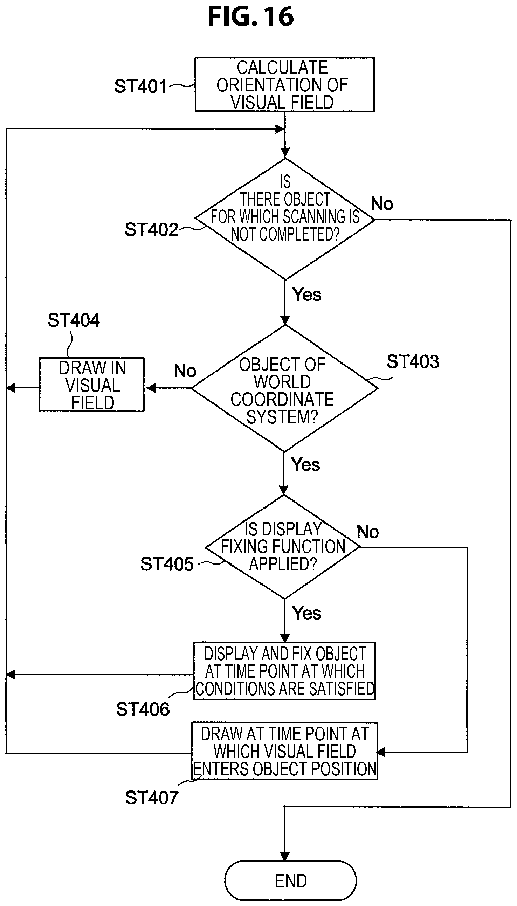

FIG. 16 is a flowchart illustrating an example of procedure for drawing an object in the visual field V by the control unit 30.

The control unit 30 calculates the current orientation of the visual field V based on the output of the detecting unit 20 (step 401). The orientation of the visual field V is converted into the world coordinate system ($\theta$, h), and which position on the cylindrical coordinates C0 the orientation corresponds is monitored.

Then, the control unit 30 determines whether there is an object for which scanning (processing from step 403 onward) is not completed among all the objects stored in the memory 302 (step 402). The above-described scanning is performed for all the objects stored in the memory 302 every time the screen is updated.

In the case where there is an object for which scanning is not completed, it is determined whether the object is an object of the world coordinate system (step 403), and, in the case where the determination is "No", the object is drawn in the visual field V (step 404).

On the other hand, in the case where the determination is "Yes" in step 403, it is determined whether any of the above-described object display fixing functions (for example, the first grab function) is applied for the object (step 405). In the case where the function is applied, the object is fixed and displayed in the visual field V at a time point at which predetermined conditions are satisfied (step 406). On the other hand, in the case where none of the display fixing functions is applied, the object is drawn in the visual field V at a time point at which the visual field V enters the object position (step 407).

The above-described processing is repeated thereafter. By this means, it is possible to provide the latest object according to the current position of the user U to the user U via the display unit 10.

(Application example)

An application example of the HMD 100 of the present embodiment will be described below.

(Roll angle-dependent mode)

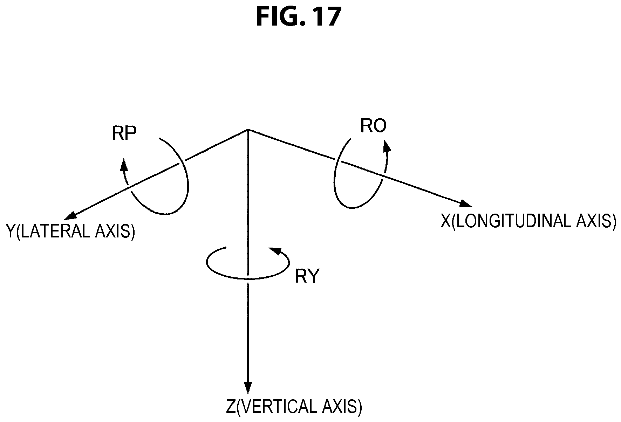

FIG. 17 is a diagram illustrating an example of a yaw angle, a pitch angle, and a roll angle. As described above, the present embodiment is capable of providing a visual field of a user with an object (hereinafter, also referred to as "AR object") corresponding to at least any one of an orientation RY (hereinafter, also referred to as "yaw angle") around the vertical axis (Z axis) of the display unit 10 and a depression angle (or an elevation angle) RP (hereinafter, also referred to as "pitch angle") around the lateral axis (Y axis) of the display unit 10. The object may be associated with coordinates of the real world (may be associated with a subject around the display unit 10). In this case, the display control unit 314 may cause the position and the orientation of the AR object with respect to the visual field of the user to depend on an angle RO (hereinafter, also referred to as "roll angle") around the longitudinal axis (X axis) of the display unit 10. Such a case will be described.

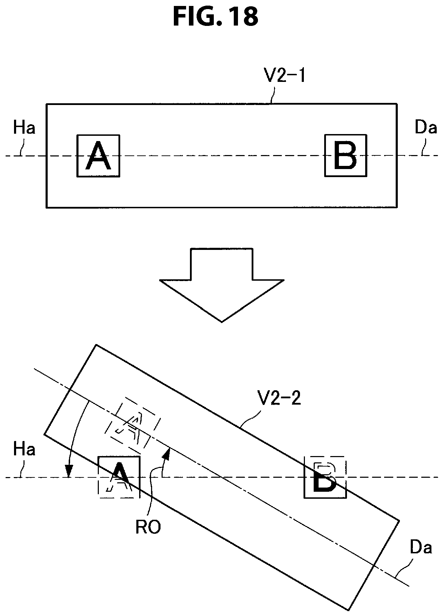

FIG. 18 is a diagram for explaining an example in which a position and an orientation of an AR object with respect to a visual field of a user are dependent on the roll angle. As shown in FIG. 18, the display control unit 314 displays AR objects A and B in a visual field V2-1 of the user. As shown in the visual field V2-1, in the case where the user does not tilt his/her head (in the case where the roll angle is zero), a lateral central axis Da of the HMD 100 is horizontal. A horizontal axis Ha is a horizontal axis orthogonal to the eye line Lh (see FIG. 1) of the user U in the horizontal direction.

Subsequently, as shown in a visual field V2-2, in the case where the user tilts his/her head (in the case where the roll angle has changed), the lateral central axis Da of the HMD 100 inclines with respect to the horizontal axis Ha. In this case, the display control unit 314 may cause the positions and the orientations of the AR objects A and B with respect to the visual field V2-2 to depend on the roll angle RO.

To be more specific, the display control unit 314 may rotate the AR objects A and B in a direction opposite to a direction of the roll angle RO to an extent that is the same as the roll angle RO and may display the AR objects A and B in the visual field V2-2. The rotation axis may be the intersection of the lateral central axis Da and the horizontal axis Ha. As shown in this example, there are assumed various scenes in which a mode in which the position and the orientation of the AR object with respect to the visual field of the user is dependent on the roll angle (hereinafter, may also be simply referred to as "roll angle-dependent") is suitable.

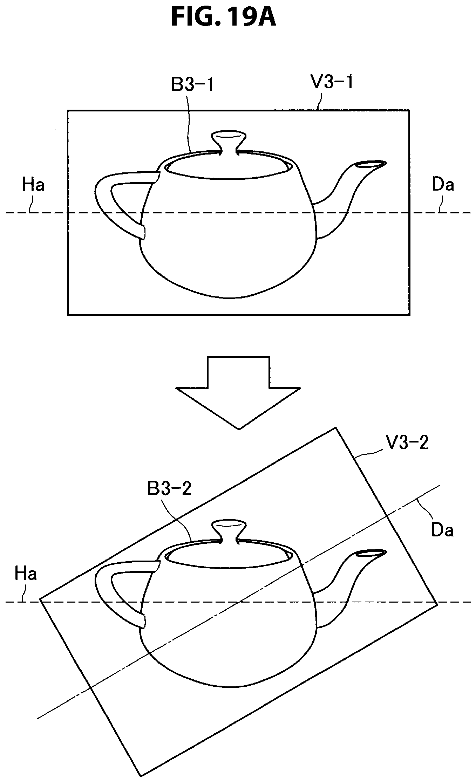

FIG. 19A is a diagram for explaining an example of a scene in which a roll angle-dependent mode is suitable. Referring to FIG. 19A, the display control unit 314 displays an AR object B3-1, which is a three-dimensional object, in a visual field V3-1. In this case, in the case where the roll angle has changed, the display control unit 314 may rotate the AR object B3-1 in the visual field V3-1 in the direction opposite to the direction of the roll angle to an extent that is the same as the roll angle and may display the AR object B3-1 in a visual field V3-2.

As shown in the example shown in FIG. 19A, in the case where the display control unit 314 displays a three-dimensional object or the like, the display control unit 314 may display the AR object in the roll angle-dependent mode in a manner that a sense that the AR object really exists is expressed preferentially (in a manner that the position and the orientation of the AR object with respect to the visual field are accurately expressed preferentially). Note that the three-dimensional object may include a three-dimensional model (for example, may also include a model that can be seen three-dimensionally through parallax between left and right and a model defined by a sketch (trihedral figure)).

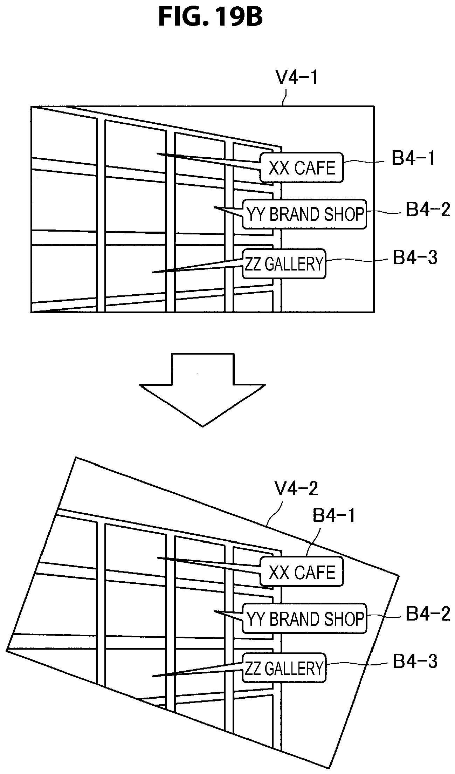

Further, FIG. 19B is a diagram for explaining another example of a scene in which the roll angle-dependent mode is suitable. Referring to FIG. 19B, the display control unit 314 displays, in a visual field V4-1, AR objects (AR objects B4-1 to B4-3) which are present in a region in which a density of displayed objects exceeds a threshold. In this case, in the case where the roll angle has changed, the display control unit 314 may rotate the AR objects B4-1 to B4-3 in the visual field V4-1 in the direction opposite to the direction of the roll angle to an extent that is the same as the roll angle and may display the AR objects B4-1 to B4-3 in a visual field V4-2.

As shown in the example shown in FIG. 19B, in the case where the display control unit 314 displays AR objects (AR objects B4-1 to B4-3) which are present in the region in which the density of displayed objects exceeds a threshold or the like, the display control unit 314 may display the AR objects in the roll angle-dependent mode in a manner that the positions of the AR objects with respect to the visual field is accurately expressed preferentially. Note that another AR object which attaches importance to accurately expressing the position of the AR object with respect to the visual field may similarly displayed in the roll angle-dependent mode.

(Roll angle-independent mode)

As described above, the position and the orientation of the AR object with respect to the visual field of the user may depend on the roll angle. However, referring to FIG. 18, for example, parts of the respective AR objects A and B are out of the visual field V2-2 of the user, and retrieval performance of the AR objects A and B is reduced. Accordingly, a technology which is capable of improving the retrieval performance of the AR object displayed in the visual field of the user will be mainly proposed below. To be specific, the display control unit 314 does not necessarily cause the position and the orientation of the AR object with respect to the visual field of the user to depend on the roll angle.

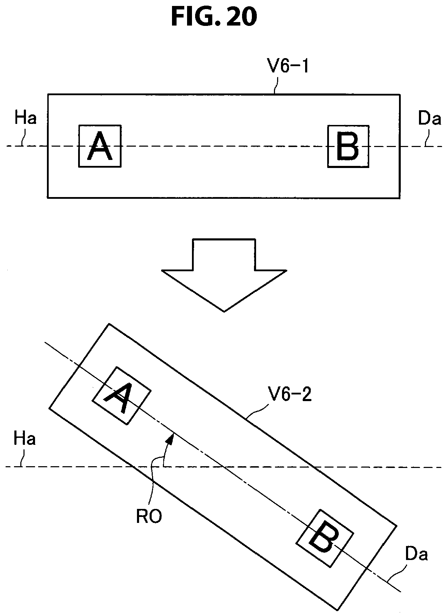

FIG. 20 is a diagram for explaining an example in which a position and an orientation of an AR object with respect to a visual field of a user are not dependent on the roll angle. As shown in FIG. 20, the display control unit 314 displays AR objects A and B in a visual field V6-1 of the user. As shown in the visual field V6-1, in the case where the user does not tilt his/her head (in the case where the roll angle is zero), the lateral central axis Da of the HMD 100 is horizontal.

Subsequently, as shown in a visual field V6-2, in the case where the user tilts his/her head (in the case where the roll angle has changed), the lateral central axis Da of the HMD 100 inclines with respect to the horizontal axis Ha. In this case, the display control unit 314 does not necessarily cause the positions and the orientations of the AR objects A and B with respect to the visual field V6-2 to depend on the roll angle RO.

To be more specific, the display control unit 314 does not necessarily change the positions and the orientations of the AR objects A and B with respect to the visual field V6-2 before and after the change in the roll angle. As shown in this example, there are assumed various scenes in which a mode in which the position and the orientation of the AR object with respect to the visual field of the user is not dependent on the roll angle (hereinafter, may also be simply referred to as "roll angle-independent") is suitable. Note that an example in which the position and the orientation of the AR object with respect to the visual field of the user are not dependent on the roll angle will be mainly described below, however, the orientation of the AR object with respect to the visual field of the user may also be dependent on the roll angle, as will be described later.

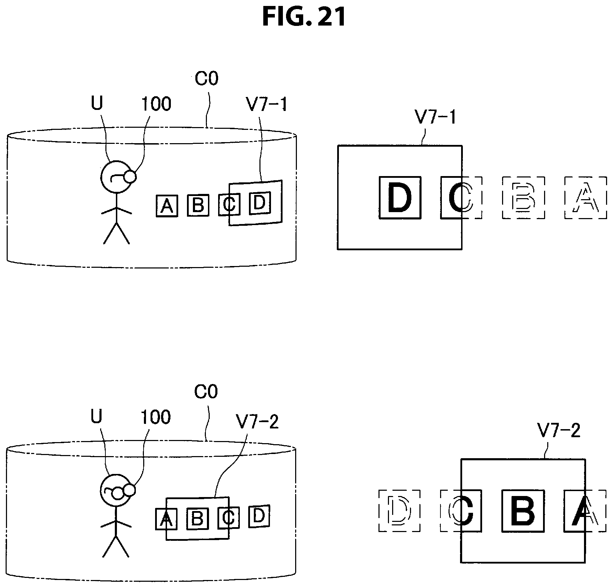

FIG. 21 is a diagram for explaining an example of a scene in which a roll angle-independent mode is suitable. Referring to FIG. 21, the display control unit 314 displays AR objects C and D in a visual field V7-1. Here, let us assume that the user attempts to select an AR object B and turns his/her head (rotates the display unit 10 around the vertical axis). Then, AR objects A to C are displayed in a visual field V7-2. For example, in the case where a predetermined operation (button-pressing operation) is performed by the user in such a state, the object B, which is the nearest to the center of the visual field V7-2 among the AR objects A to C, is selected.

As shown in this example, in the case where an AR object that can accept operation performed by the user is displayed, the display control unit 314 does not necessarily cause the position of the AR object in the visual field to depend on the roll angle. In this way, the possibility that the AR object is out of the visual field is reduced, and the operability of the AR object can be improved. Note that, although the AR object that can accept operation performed by the user is not particularly limited, the AR object may accept the pressing operation performed by the user, and may be included as part of a menu screen in which one or a plurality of AR objects are arranged, for example.

(Difference in retrieval performance)

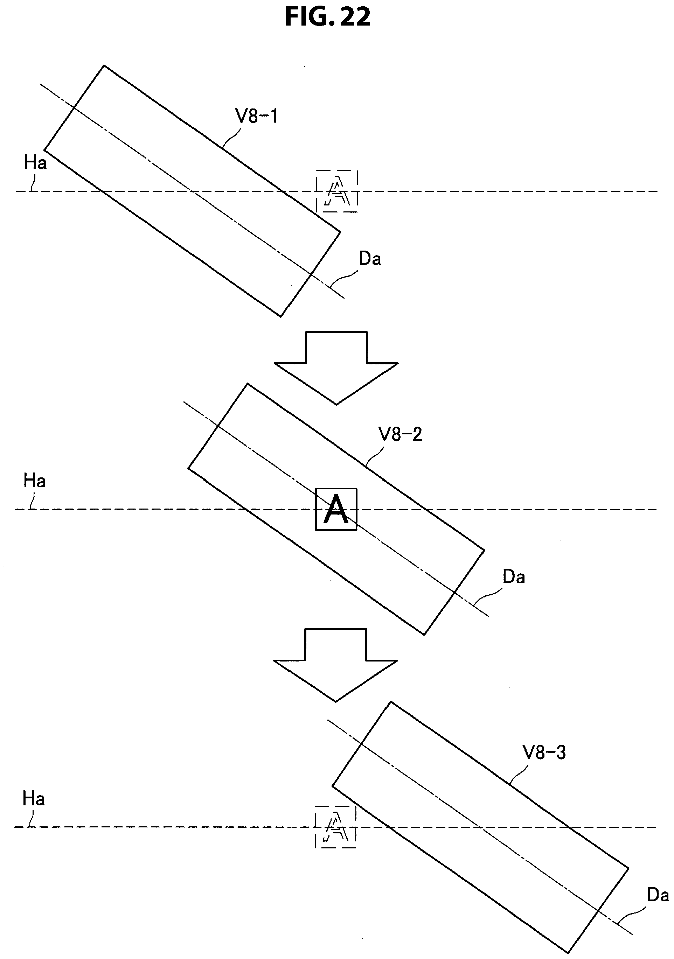

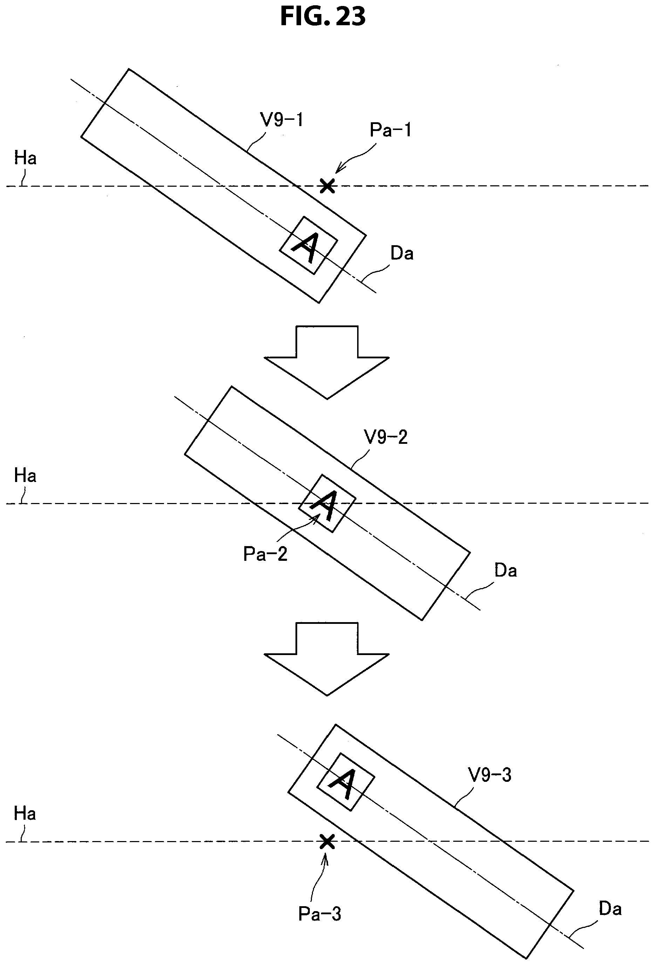

Subsequently, a difference in retrieval performance of an AR object between the case where the display mode of the AR object is roll angle-dependent and the case where the display mode of the AR object is roll angle-independent will be further described. FIG. 22 is a diagram for explaining retrieval performance of an AR object, in the case where a display mode of the AR object is roll angle-dependent. Further, FIG. 23 is a diagram for explaining retrieval performance of an AR object, in the case where a display mode of the AR object is roll angle-independent.

Here, as shown in FIG. 22 and FIG. 23, let us assume the case where the user turns his/her head in the state in which the user tilts his/her head (let us assume the case where the display unit 10 is rotated around the vertical axis in the state in which the roll angle is fixed). In such a case, referring to FIG. 22, the display control unit 314 cannot display the AR object A in a visual field V8-1 of the user yet. Subsequently, the display control unit 314 displays the AR object A in a visual field V8-2, but cannot display the AR object A in the subsequent visual field V8-3.

On the other hand, referring to FIG. 23, the display control unit 314 can display the AR object A in a visual field V9-1 of the user. Further, the display control unit 314 can also display the AR object A in a visual field V9-2, and can also display the AR object A in the subsequent visual field V9-3. In this way, in the case where the display mode of the AR object is roll angle-independent, the period during which the AR object A stays within the visual field is longer than the case where the display mode of the AR object is roll angle-dependent, and hence, the retrieval performance of the AR object A can be improved.

(Roll limiting angle)

In the above, the example has been described in which, in the case where the display mode of the AR object is roll angle-dependent, the display control unit 314 rotates the AR object in the visual field in the direction opposite to the direction of the roll angle to an extent that is the same as the roll angle and displays the AR object in the visual field. However, when the AR object is rotated in the direction opposite to the direction of the roll angle to the extent that is the same as the roll angle, a situation in which the AR object does not fit in the visual field may occur. Further, in such a situation, a situation may occur in which the AR object is not viewed by the user. Accordingly, in the case where the display mode of the AR object is roll angle-dependent, the display control unit 314 may limit the rotation of the AR object in accordance with a situation.

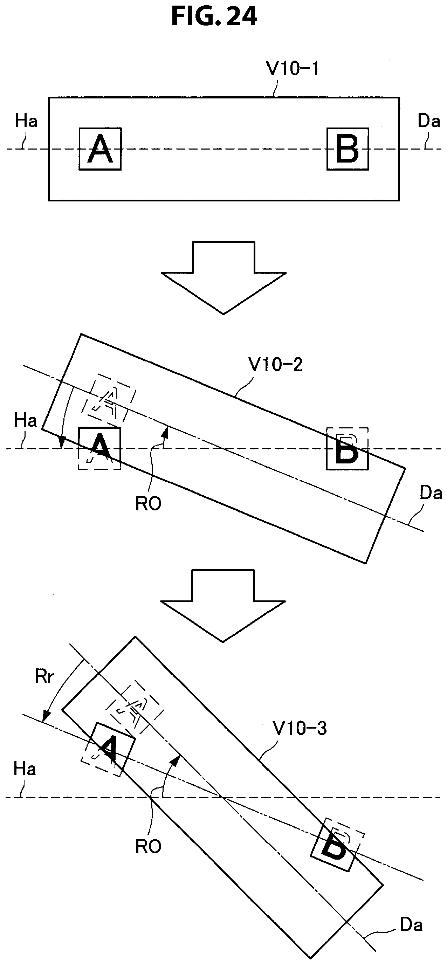

Specific example will be described. FIG. 24 is a diagram for explaining an example of a mode of limiting rotation of an AR object in accordance with a situation, in the case where a display mode of the AR object is roll angle-dependent. As shown in FIG. 24, the display control unit 314 displays AR objects A and B in a visual field V10-1 of the user. As shown in the visual field V10-1, in the case where the user does not tilt his/her head (in the case where the roll angle is zero), the lateral central axis Da of the HMD 100 is horizontal.

Subsequently, as shown in a visual field V10-2, in the case where the user tilts his/her head (in the case where the roll angle has changed), the lateral central axis Da of the HMD 100 inclines with respect to the horizontal axis Ha. In this case, until the roll angle RO exceeds a predetermined angle (hereinafter, also referred to as "roll limiting angle") RO, the display control unit 314 may rotate the AR objects A and B in the direction opposite to the direction of the roll angle RO to an extent that is the same as the roll angle RO and may display the AR objects A and B in the visual field V10-2. However, if the AR objects A and B are rotated in the same manner even if the roll angle RO exceeds the roll limiting angle Rr, the situation may occur in which the AR objects A and B do not fit in the visual field V10-3.

Accordingly, in the case where the roll angle RO exceeds the roll limiting angle Rr, the display control unit 314 may rotate the positions of the AR objects A and B in the direction opposite to the direction of the roll angle RO to an extent that is the same as the roll limiting angle Rr. In this way, the situation in which the AR objects A and B do not fit in the visual field V10-3 can be prevented, and the reduction in the retrieval performance of the AR objects A and B can be suppressed.

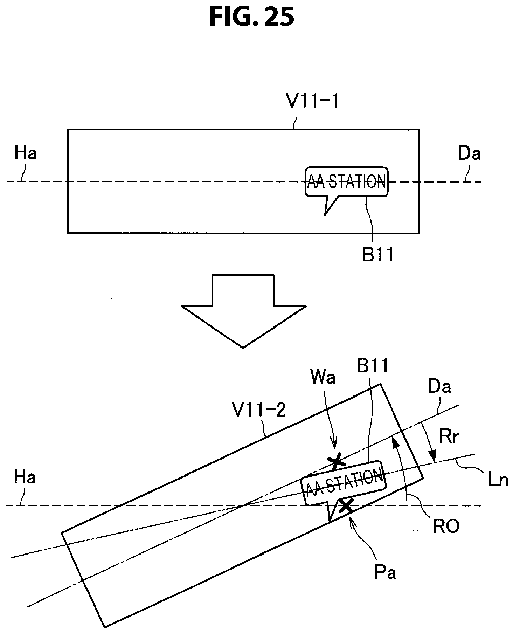

Further description of the example will be continued in which the rotation of the AR object is limited in accordance with a situation, in the case where the display mode of the AR object is roll angle-dependent. FIG. 25 is a diagram for explaining a detailed example of a mode of limiting rotation of an AR object in accordance with a situation, in the case where a display mode of the AR object is roll angle-dependent. As shown in FIG. 25, the display control unit 314 displays an AR object B11 (an AR object that depicts a name of a station) on the horizontal axis Ha of a visual field V11-1 of the user. As shown in the visual field V11-1, in the case where the user does not tilt his/her head (in the case where the roll angle is zero), the lateral central axis Da of the HMD 100 is horizontal.

Subsequently, as shown in a visual field V11-2, in the case where the user tilts his/her head (in the case where the roll angle has changed), the lateral central axis Da of the HMD 100 inclines with respect to the horizontal axis Ha. In this case, let us assume the case where the roll angle RO exceeds the roll limiting angle Rr. In such a case, if the AR object B11 is rotated in the direction opposite to the direction of the roll angle RO to an extent that is the same as the roll angle RO, the AR object B11 is moved from a position Wa to a position Pa, and thus, a situation may occur in which the AR object B11 does not fit in the visual field V11-2.

Accordingly, in such a case, the display control unit 314 may rotate the position of the AR object B11 in the direction opposite to the direction of the roll angle RO to an extent that is the same as the roll limiting angle Rr. In this way, the situation in which the AR object B11 does not fit in the visual field V11-3 can be prevented, and the reduction in the retrieval performance of the AR object B11 can be suppressed.

(Combination of roll angle-independent mode and height limitation)

Heretofore, the example has been described in which the rotation of the AR object is limited in accordance with a situation in the case where a display mode of the AR object is roll angle-dependent. In the above description, the example has been described in which, when the display control unit 314 displays an object corresponding to the pitch angle in a visual field, the coordinate setting unit 311 limits the pitch angle corresponding to the object within a predetermined range. To be more specific, the coordinate setting unit 311 can limit the visual field region (Hv) in the height direction of the visual field V on the cylindrical coordinates C0. Here, by combining the function of limiting the visual field region (Hv) in the height direction of the visual field V with a roll angle-independent mode, it is expected that the retrieval performance of the AR object is further improved.

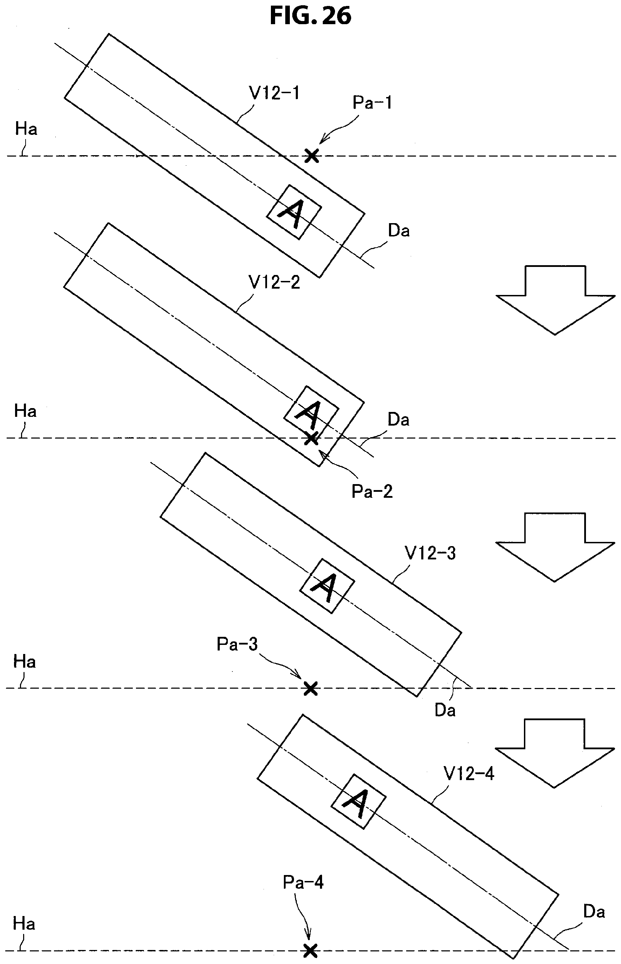

FIG. 26 is a diagram for explaining a case in which a function of limiting a visual field region is combined with the roll angle-independent mode. In the example shown in FIG. 26, assumed is a case in which, in the case where the function of limiting the visual field region is combined with the roll angle-independent mode, a user sees above the horizontal axis Ha in the state of tilting his/her head and then turns his/her head to the right (visual fields V12-1 to V12-4). Referring to the visual fields V12-1 to V12-4 of FIG. 26, the AR object A moves from one end to the other end of the visual field.

As shown in this example, in the case where the function of limiting the visual field region is combined with the roll angle-independent mode, while the user turns his/her head 360° around the vertical axis, the possibility that the AR object moves from one end to the other end of the visual field increases, and thus, it is expected that the retrieval performance of the AR object is further improved. Note that, in the example shown in FIG. 26, assumed is a case in which the height of the cylindrical coordinates is set to the same as the heights of the visual fields V12-1 to V12-4, and three-dimensional coordinates corresponding to the AR object A are set on the horizontal plane including the horizontal axis Ha. Further, display positions of the AR object A in the roll angle-dependent mode are represented by positions Pa-1 to Pa-4.

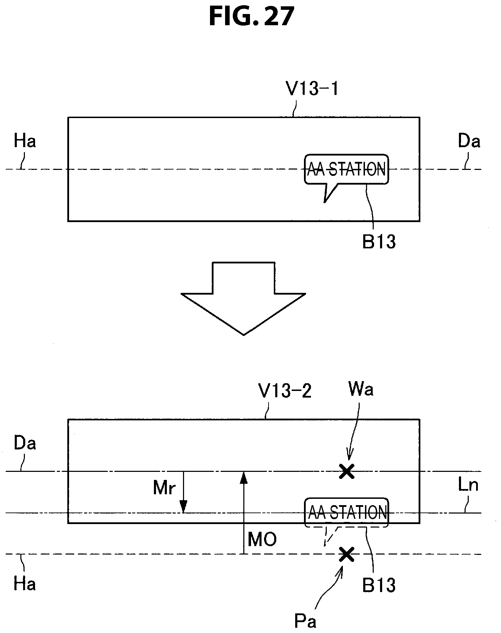

Further description of the example will be continued in which the function of limiting the visual field region is combined with the roll angle-independent mode. FIG. 27 is a diagram for explaining in detail a case in which a function of limiting a visual field region is combined with the roll angle-independent mode. As shown in FIG. 27, the display control unit 314 displays an AR object B13 (an AR object that depicts a name of a station) on the horizontal axis Ha of a visual field V13-1 of the user. As shown in the visual field V13-1, in the case where the user does not tilt his/her head (in the case where the roll angle is zero), the lateral central axis Da of the HMD 100 is horizontal.

Subsequently, as shown in a visual field V13-2, in the case where the user sees above the horizontal axis Ha (in the case where the pitch angle has changed), the lateral central axis Da of the HMD 100 moves upward. In this case, let us assume the case where the amount of movement MO of the lateral central axis Da exceeds a predetermined amount of movement Mr. In such a case, if the AR object B13 is moved in the direction opposite to the direction of the movement MO of the lateral central axis Da to an extent that is the same as the movement MO of the lateral central axis Da, the AR object B13 is moved from a position Wa to a position Pa, and thus, a situation may occur in which the AR object B13 does not fit in the visual field V13-2.

Accordingly, in such a case, the display control unit 314 may move the position of the AR object B13 in the direction opposite to the direction of the movement MO of the lateral central axis Da to an extent that is the same as the predetermined amount of movement Mr. In this way, the situation in which the AR object B13 does not fit in the visual field V13-2 can be prevented, and the reduction in the retrieval performance of the AR object B13 can be suppressed. In FIG. 27, the AR object B13, which has been moved in the direction opposite to the direction of the movement MO of the lateral central axis Da to an extent that is the same as the predetermined amount of movement Mr, is present on a line Ln.

(Convergence of position of AR object)

Heretofore, the example has been described in which the function of limiting the visual field region is combined with the roll angle-independent mode. In the above description, the example has been described in which, in the case where the roll angle exceeds the roll limiting angle in the roll angle-dependent mode, the display control unit 314 rotates the position of the AR object in the direction opposite to the direction of the roll angle to an extent that is the same as the roll limiting angle. In this case, in the case where the roll angle exceeds the roll limiting angle in the roll angle-dependent mode, the display control unit 314 may also cause the position of the AR object to gradually converge on a position at which the AR object is rotated in the direction opposite to the direction of the roll angle to an extent that is the same as the roll limiting angle.

For example, in the case where the roll angle exceeds the roll limiting angle in the roll angle-dependent mode, the display control unit 314 may gradually move the position of the AR object in the visual field, from a position at which the display control unit 314 rotates the position of the AR object in the direction opposite to the direction of the roll angle to an extent that is the same as the roll angle (a position on the horizontal axis) to a position at which the display control unit 314 rotates the position of the AR object in the direction opposite to the direction of the roll angle to an extent that is the same as the roll limiting angle. This can encourage the user to perform movement to make the roll angle zero (movement to make the lateral central axis Da of the HMD 100 parallel to the horizontal axis Ha).

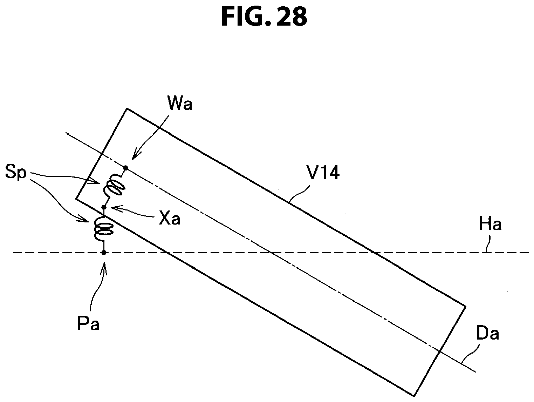

Description will be made specifically with reference to FIG. 28. FIG. 28 is a diagram for explaining a display example of an AR object in the case where the roll angle exceeds a roll limiting angle in the roll angle-dependent mode. As shown in FIG. 28, let us assume the case in which an AR object is represented by a substance Xa, and, of two springs SP connected to the substance Xa, the first spring SP is connected to the horizontal axis Ha (the position Pa of the AR object in the roll angle-dependent mode) and the second spring SP is connected to the lateral central axis Da (the position Wa of the AR object in the roll angle-independent mode). In such a case, a position of the substance Xa that is statically in balance may be calculated as the position on which the AR object converges. The respective spring constants of the two springs SP may be the same or different from each other.

Alternatively, instead of the two springs SP, a spring and a damper may be used. In such a case, the position on which the AR object converges may be controlled by PD control by the spring and the damper. Further, using a dynamic model in which the AR object is connected via a spring to the lateral central axis Da of the HMD 100 in a system in which friction is present, the position on which the AR object converges as a result of being pulled toward (or pushed against) the lateral central axis Da in a roll direction may be calculated as the position on which the AR object converges.

Further, an internally dividing point may simply be calculated as the position on which the AR object converges, the internally dividing point being a point at a predetermined ratio on a line connecting the position Pa of the AR object in the roll angle-dependent mode and the position Wa of the AR object in the roll angle-independent mode (or on a circular arc centered at the intersection of the lateral central axis Da and the horizontal axis Ha). However, in order to prevent the AR object from being out of the visual field, the AR object may be immediately moved inside the visual field without being gradually converged in the case where the roll angle exceeds a certain extent.

Further, in the above description, the example has been described in which, in the case where the amount of movement of the lateral central axis of the HMD 100 exceeds a predetermined amount of movement, the display control unit 314 moves the position of the AR object in the direction opposite to the direction of the movement of the lateral central axis to an extent that is the same as the predetermined amount of movement. However, in the case where the amount of movement of the lateral central axis of the HMD 100 exceeds the predetermined amount of movement, the display control unit 314 may cause the position of the AR object to gradually converge on the position at which the position of the AR object is moved in the direction opposite to the direction of the movement of the lateral central axis to an extent that is the same as the predetermined amount of movement.

For example, in the case where the amount of movement of the lateral central axis of the HMD 100 exceeds the predetermined amount of movement, the display control unit 314 may cause the position of the AR object in the visual field to gradually converge, from a position at which the position of the AR object is moved in the direction opposite to the direction of the movement of the lateral central axis to an extent that is the same as the predetermined amount of movement (a position on the horizontal axis) to a position at which the position of the AR object is moved in the direction opposite to the direction of the movement of the lateral central axis to an extent that is the same as the predetermined amount of movement. This can encourage the user to perform movement to make the pitch angle zero (movement to make the center of the lateral central axis Da of the HMD 100 to match the horizontal axis Ha).

Further description will be made in detail. Let us assume the case in which an AR object is represented by a substance and, of two springs connected to the substance, the first spring is connected to the horizontal axis Ha (the position of the AR object in the case where the visual field region in the height direction is limited) and the second spring is connected to the lateral central axis Da (the position of the AR object in the case where the visual field region in the height direction is not limited). In such a case, a position of the substance that is statically in balance may be calculated as the position on which the AR object converges. The respective spring constants of the two springs may be the same or different from each other.

Alternatively, instead of the two springs, a spring and a damper may be used. In such a case, the position on which the AR object converges may be controlled by PD control by the spring and the damper. Further, using a dynamic model in which the AR object is connected via a spring to the lateral central axis of the HMD 100 in a system in which friction is present, the position on which the AR object converges as a result of being pulled toward (or pushed against) the lateral central axis of the HMD 100 in the height direction may be calculated as the position on which the AR object converges.

Further, an internally dividing point may simply be calculated as the position on which the AR object converges, the internally dividing point being a point at a predetermined ratio on a line connecting the position of the AR object in the case where the visual field region in the height direction is limited and the position of the AR object in the case where the visual field region in the height direction is not limited. However, in order to prevent the AR object from being out of the visual field, the AR object may be immediately moved inside the visual field without being gradually converged in the case where the amount of movement of the lateral central axis of the HMD 100 exceeds a certain extent.

Note that the gradual convergence of the position of the AR object as described above may be set as a subordinate attribute with respect to the roll angle-dependent mode. In such a case, a function of application refers to the subordinate attribute, and processing of drawing the AR object corresponding to the subordinate attribute may be performed. The subordinate attribute may be set in any way, and may be set for each AR object by a developer of the application, for example.

(Modified example of roll angle dependency)

Additionally, in the above, the example has been described in which, in the case where the display mode of the AR object is roll angle-independent, the orientation of the AR object with respect to the visual field of the user is not dependent on the roll angle. However, in the case where the display mode of the AR object is roll angle-independent, the display control unit 314 may also cause the orientation of the AR object with respect to the visual field of the user to depend on the roll angle. In this manner, it is considered that a sense that the AR object really exists is expressed, and the retrieval performance of the AR object can also be improved. Such an example will be described.

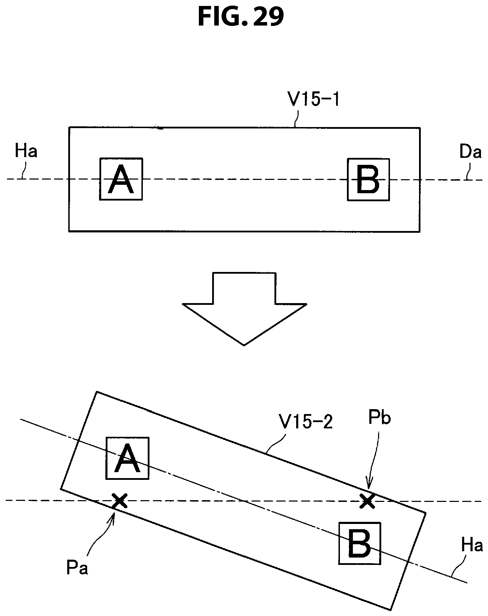

FIG. 29 is a diagram for explaining an example in which an orientation of an AR object is dependent on the roll angle, in the case where a display mode of the AR object is roll angle-independent. As shown in FIG. 29, the display control unit 314 displays AR objects A and B in a visual field V15-1 of the user. As shown in the visual field V15-1, in the case where the user does not tilt his/her head (in the case where the roll angle is zero), the lateral central axis Da of the HMD 100 is horizontal.

Subsequently, as shown in a visual field V15-2, in the case where the user tilts his/her head (in the case where the roll angle has changed), the lateral central axis Da of the HMD 100 inclines with respect to the horizontal axis Ha. In this case, the display control unit 314 does not necessarily cause the positions of the AR objects A and B with respect to the visual field V15-2 to depend on the roll angle RO, but on the other hand, the display control unit 314 may cause the orientations of the AR objects A and B with respect to the visual field V15-2 to depend on the roll angle RO.

To be more specific, as shown in FIG. 29, the display control unit 314 does not necessarily change the positions of the AR objects A and B with respect to the visual field V15-2 before and after the change in the roll angle. Further, as shown in FIG. 29, the display control unit 314 may rotate the orientations of the AR objects A and B with respect to the visual field V15-2 in the direction opposite to the direction of the roll angle to an extent that is the same as the roll angle and may display the AR objects A and B in the visual field V15-2.

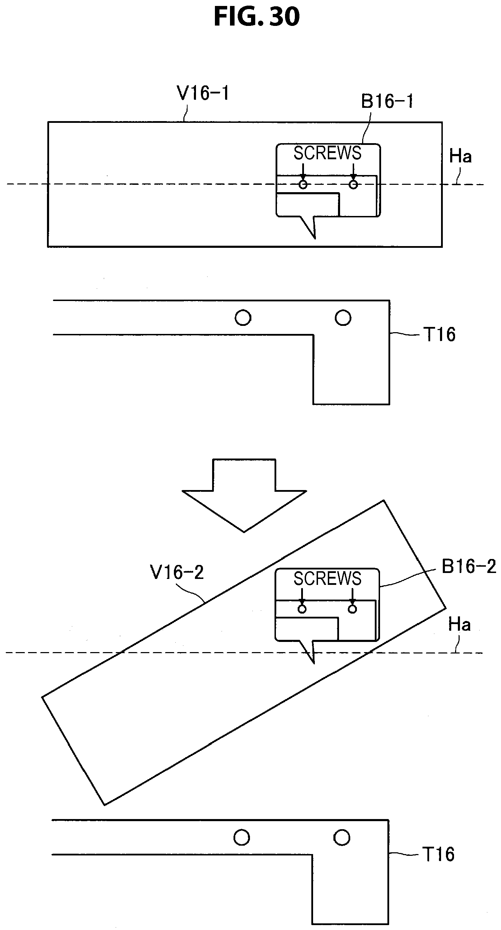

Further description will be continued of the example in which the orientation of the AR object with respect to the visual field of the user is dependent on the roll angle, in the case where the display mode of the AR object is roll angle-independent. FIG. 30 is a diagram for explaining a detailed example in which an orientation of an AR object with respect to a visual field of a user is not dependent on the roll angle, in the case where a display mode of the AR object is roll angle-independent.

Referring to FIG. 30, the display control unit 314 displays, in a visual field V16-1, an AR object (for example, an AR object B16-1 that illustrates a working procedure) which is checked against a real substance (for example, a work subject T16). In this case, in the case where the roll angle has changed, the display control unit 314 may rotate the AR object B16-1 in the visual field V16-1 in the direction opposite to the direction of the roll angle to an extent that is the same as the roll angle and may display the AR object B16-1 in the visual field V16-2.

As shown in the example shown in FIG. 30, in the case where the display control unit 314 displays the AR object (for example, the AR object B16-1 that illustrates a working procedure) which is checked against the real substance (for example, the work subject T16), the display control unit 314 may display the AR object in the roll angle-dependent mode in a manner that the orientation of the AR object with respect to the visual field is accurately expressed preferentially.

Note that that the orientation of the AR object is dependent on the roll angle as described above may be set as a subordinate attribute with respect to the roll angle-independent mode. In such a case, a function of application refers to the subordinate attribute, and processing of drawing the AR object corresponding to the subordinate attribute may be performed. The subordinate attribute may be set in any way, and may be set for each AR object by a developer of the application, for example.

(Selecting operation mode)

Heretofore, the roll angle-dependent mode and the roll angle-independent mode have been described. Here, any one of the roll angle-dependent mode and the roll angle-independent mode may be perpetually used or may be appropriately selected. Hereinafter, there will be described an example in which the display control unit 314 can select, as the display mode of the AR object, any one of a first mode in which the roll angle-independent mode is used (hereinafter, also referred to as "roll angle-independent mode") and a second mode in which the roll angle-dependent mode is used (hereinafter, also referred to as "roll angle-dependent mode"), as an operation mode.

First, the display control unit 314 may select, on the basis of operation performed by the user, any one of the roll angle-independent mode and the roll angle-dependent mode as the operation mode. For example, in the case where the operation for selecting the roll angle-independent mode is input by the user, the display control unit 314 may select the roll angle-independent mode as the operation mode. On the other hand, in the case where the operation for selecting the roll angle-dependent mode is input by the user, the display control unit 314 may select the roll angle-dependent mode as the operation mode.

Further, in the case where an AR object is capable of accepting operation performed by the user, the display control unit 314 may select the roll angle-independent mode as the operation mode. This is because, in the case where the AR object which is capable of accepting operation performed by the user is displayed, it is considered that that retrieval performance of the AR object is improved is more desirable than that a sense that the AR object really exists is expressed. Note that, as described above, although the AR object that can accept operation performed by the user is not particularly limited, the AR object may accept the pressing operation performed by the user, and may be included as part of a menu screen in which one or a plurality of AR objects are arranged, for example.

Further, the display control unit 314 may also select the operation mode on the basis of information associated with the AR object. The information associated with the AR object may be information indicating whether to select the roll angle-independent mode (information indicating roll angle dependency), or may be other information (for example, information indicating whether the AR object is a three-dimensional object).

For example, in the case where the AR object is a three-dimensional object, the display control unit 314 may select the roll angle-dependent mode as the operation mode. This is because, in the case where the AR object is the three-dimensional object, it is considered that that a sense that the AR object really exists is expressed is more desirable than that retrieval performance of the AR object is improved.

Further, the display control unit 314 may also select any one of the roll angle-independent mode and the roll angle-dependent mode as the operation mode on the basis of the ability of the HMD 100. For example, in the case where the ability of the HMD 100 is lower than a threshold, the display control unit 314 may select the roll angle-independent mode as the operation mode. This is because, in the case where the ability of the HMD 100 is lower than the threshold, it is considered that it is desirable that the processing load on the display control unit 314 be reduced by selecting the roll angle-independent mode in which the processing of rotating the AR object is not performed.

On the other hand, for example, in the case where ability of the HMD 100 is higher than the threshold, the display control unit 314 may select the roll angle-dependent mode as the operation mode. This is because, in the case where the ability of the HMD 100 is higher than the threshold, it is considered that the roll angle-independent mode in which the processing of rotating the AR object is performed is selected and there is a possibility that the processing load on the display control unit 314 may not necessarily be reduced.

Note that the ability of the HMD 100 may be an ability to perform processing of drawing the AR object by the display control unit 314. The ability to perform processing of drawing the AR object may be an ability of an arithmetic unit, or may be an ability that is obtained by excluding, from the ability of the arithmetic unit, the ability used by operation other than the processing of drawing the AR object.

Alternatively, the ability of the HMD 100 may select the operation mode on the basis of a remaining battery level of the HMD 100. For example, in the case where the remaining battery level of the HMD 100 is lower than a threshold, the display control unit 314 may select the roll angle-independent mode as the operation mode. This is because, in the case where the remaining battery level of the HMD 100 is lower than the threshold, it is considered that it is desirable that power consumed by the display control unit 314 be reduced by selecting the roll angle-independent mode in which the processing of rotating the AR object is not performed.

On the other hand, for example, in the case where the remaining battery level of the HMD 100 is higher than the threshold, the display control unit 314 may select the roll angle-dependent mode as the operation mode. This is because, in the case where the remaining battery level of the HMD 100 is higher than the threshold, it is considered that roll angle-independent mode in which the processing of rotating the AR object is performed is selected and there is a possibility that power consumed by the display control unit 314 may not necessarily be reduced.

Note that, in the case where the operation mode is switched, the position of the AR object may be made to transition gradually (the AR object may be made to transition through an animation expression). Here, the switching of the operation mode may be achieved by an application function. For example, since the processing of drawing the AR object is performed on the basis of a reference result of the operation mode, the switching of the operation mode in processing of drawing an AR object may be reflected on the processing of drawing the next AR object.

However, in the case where the position of the AR object is made to transition gradually, processing blocks for gradually changing the position and the orientation of the AR object may be prepared separately from application. Alternatively, the position and the orientation of the AR object may be gradually changed by the application function.

(Updating roll limiting angle)

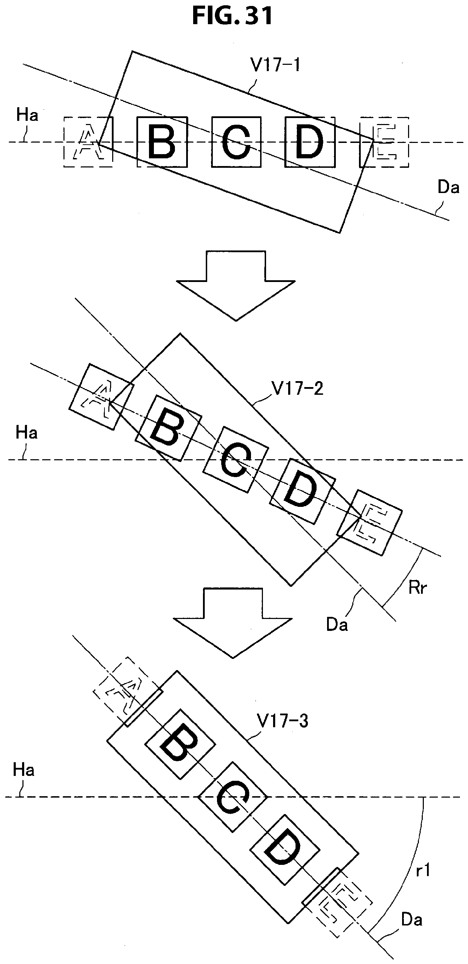

Heretofore, there has been described the example of selecting any one of the roll angle-independent mode and the roll angle-dependent mode as the operation mode. Here, the roll limiting angle in the roll angle-dependent mode may be a fixed value, or may be updated in accordance with a situation. Hereinafter, there will be described updating of the roll limiting angle. FIG. 31 is a diagram for explaining an example of updating a roll limiting angle. For example, in FIG. 31, AR objects A to E may be included in a menu screen.

First, as shown in a visual field V17-1, in the case where the user tilts his/her head, the lateral central axis Da inclines with respect to the horizontal axis Ha. In this case, in the roll angle-dependent mode, until the roll angle exceeds the roll limiting angle Rr, the display control unit 314 may rotate the AR objects A to E in the direction opposite to the direction of the roll angle to an extent that is the same as the roll angle and may display the AR objects A to E in the visual field V17-1.

Then, as shown in a visual field V17-2, in the case where the roll angle exceeds the roll limiting angle Rr, the display control unit 314 may rotate the positions of the AR objects A to E in the direction opposite to the direction of the roll angle to an extent that is the same as the roll limiting angle Rr. However, in the case where a period in which the extent of the roll angle exceeds a threshold (for example, 60°) continues for a predetermined period (for example, 10 seconds), it is highly likely that the posture of the user itself has changed, so it is considered that the retrieval performance of the AR objects A to E is improved by updating the roll limiting angle Rr.

Accordingly, in the case where the period in which the extent of the roll angle exceeds a threshold r1 continues for a predetermined period, the display control unit 314 may update the roll limiting angle Rr. In the example shown in FIG. 31, since the period in which the extent of the roll angle exceeds a threshold r1 has continued for the predetermined period, the display control unit 314 displays the AR objects A to E in a visual field V17-3 by making the roll limiting angle Rr smaller (for example, by setting the roll limiting angle Rr to zero). Note that with the updating of the roll limiting angle Rr, the positions of the AR objects A to E may be made to transition gradually (AR objects A to E may be made to transition through an animation expression).

Here, the updating of the roll limiting angle may be achieved by an application function. For example, since the processing of drawing the AR object is performed on the basis of a reference result of the roll limiting angle, an update result of the roll limiting angle in processing of drawing an AR object may be reflected on the processing of drawing the next AR object. However, in the case where the position of the AR object is made to transition gradually, processing blocks for gradually changing the roll limiting angle may be prepared separately from application. Alternatively, the roll limiting angle may be gradually changed by the application function.

Heretofore, there has been described the example of updating the roll limiting angle on the basis of the extent of the roll angle, however, the updating of the roll limiting angle is not limited to such an example. For example, in the case where a shape of the visual field satisfies a predetermined condition, the display control unit 314 may update a predetermined angle. To be more specific, in the case where the visual field is horizontally oriented (for example, in the case where the pitch angle corresponding to the vertical length of the visual field is smaller than 20° and the horizontal length of the visual field is longer than the vertical length of the visual field), the display control unit 314 may make the roll limiting angle smaller in order to prevent the AR object from being out of the visual field. Further, the display control unit 314 may make the AR object not to be out of the visual field (may make the roll limiting angle smaller), so that all the characters written in the AR object can be seen by the user. Alternatively, the display control unit 314 may make the roll limiting angle larger to allow part of an object to be out of the visual field but to make at least an end of the object to be included in the visual field, so that at least the presence of the object can be recognized by the user.

Moreover, for example, in the case where the ability of the HMD 100 satisfies a predetermined condition, the display control unit 314 may update the roll limiting angle. To be more specific, in the case where the ability of the HMD 100 is lower than a threshold, the display control unit 314 may make the roll limiting angle smaller (for example, the roll limiting angle may be set to zero). In the case where the ability of the HMD 100 is lower than the threshold, it is considered that it is desirable that the processing load on the display control unit 314 be reduced by not performing the processing of rotating the AR object.

Note that the ability of the HMD 100 may be an ability to perform processing of drawing the AR object by the display control unit 314. The ability to perform processing of drawing the AR object may be an ability of an arithmetic unit, or may be an ability that is obtained by excluding, from the ability of the arithmetic unit, the ability used by operation other than the processing of drawing the AR object.

(Operation of drawing AR object)

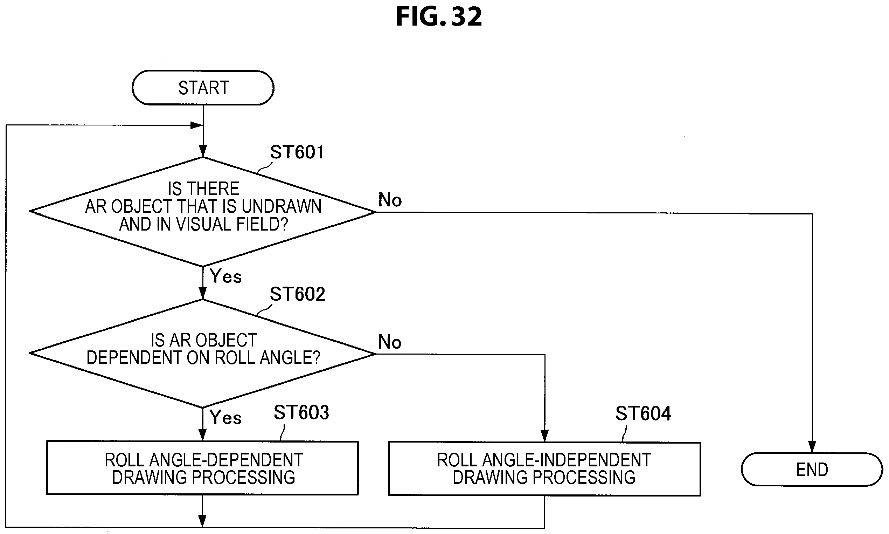

Heretofore, the updating of the roll limiting angle has been described. Subsequently, there will be described an example of operation of drawing an AR object. FIG. 32 is a flowchart illustrating an example of operation of drawing an AR object. Note that, here, an example is assumed in which the AR object is associated with information indicating whether to select the roll angle-independent mode (information indicating roll angle dependency) and the roll limiting angle.

For example, the information indicating roll angle dependency and the roll limiting angle may be associated with the AR object in advance by a developer of application in accordance with a use case. However, the information indicating roll angle dependency and the roll limiting angle may be determined as the values that do not depend on the AR object. First, the display control unit 314 determines whether there is an AR object that is undrawn and in the visual field (step 601).

Subsequently, in the case where the display control unit 314 determines that there is no AR object that is undrawn and in the visual field ("No" in step 601), the drawing operation ends. On the other hand, in the case where the display control unit 314 determines that there is an AR object that is undrawn and in the visual field ("Yes" in step 601), the display control unit 314 determines whether the AR object is dependent on the roll angle (step 602).

Next, in the case where the display control unit 314 determines that the AR object is dependent on the roll angle ("Yes" in step 602), the display control unit 314 selects the roll angle-dependent mode, performs roll angle-dependent AR object drawing processing (S603), and returns to S601. On the other hand, in the case where the display control unit 314 determines that the AR object is not dependent on the roll angle ("No" in step 602), the display control unit 314 selects the roll angle-independent mode, performs roll angle-independent AR object drawing processing (S604), and returns to S601.

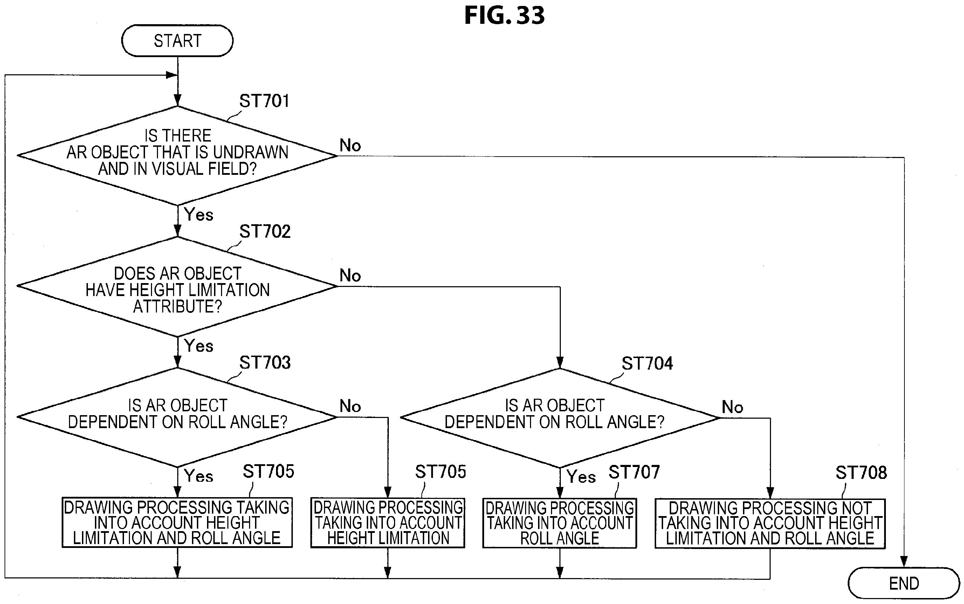

Next, another example of the operation of drawing an AR object will be described. FIG. 33 is a flowchart illustrating another example of operation of drawing an AR object. Note that, here, an example is assumed in which the AR object is associated with, in addition to information indicating whether to select the roll angle-independent mode (information indicating roll angle dependency) and the roll limiting angle, information indicating whether to limit the height of the visual field region (information indicating whether there is a height limitation attribute).

For example, the information indicating whether to limit the height of the visual field region, in addition to the information indicating roll angle dependency and the roll limiting angle, may also be associated with the AR object in advance by a developer of application in accordance with a use case. However, the information indicating whether to limit the height of the visual field region, in addition to the information indicating roll angle dependency and the roll limiting angle, may also be determined as the value that does not depend on the AR object. First, the display control unit 314 determines whether there is an AR object that is undrawn and in the visual field (step 701).

Subsequently, in the case where the display control unit 314 determines that there is no AR object that is undrawn and in the visual field ("No" in step 701), the drawing operation ends. On the other hand, in the case where the display control unit 314 determines that there is an AR object that is undrawn and in the visual field ("Yes" in step 701), the display control unit 314 determines whether the AR object has the height limitation attribute (step 702). In the case where the display control unit 314 determines that the AR object has the height limitation attribute ("Yes" in step 702), the processing proceeds to step 703, and in the case where the display control unit 314 determines that the AR object does not have the height limitation attribute ("No" in step 702), the processing proceeds to step 704.

In the case where the processing proceeds to step 703, the display control unit 314 determines whether the AR object is dependent on the roll angle (step 703). In the case where the display control unit 314 determines that the AR object is dependent on the roll angle ("Yes" in step 703), the display control unit 314 performs AR object drawing processing taking into account the height limitation and the roll angle (S703), and returns to S701. On the other hand, in the case where the display control unit 314 determines that the AR object is not dependent on the roll angle ("No" in step 703), the display control unit 314 performs AR object drawing processing taking into account the height limitation (S705), and returns to S701.

In the case where the processing proceeds to step 704, the display control unit 314 determines whether the AR object is dependent on the roll angle (step 704). In the case where the display control unit 314 determines that the AR object is dependent on the roll angle ("Yes" in step 704), the display control unit 314 performs AR object drawing processing taking into account the roll angle (S707), and returns to S701. On the other hand, in the case where the display control unit 314 determines that the AR object is not dependent on the roll angle ("No" in step 704), the display control unit 314 performs AR object drawing processing taking into account the height limitation and the roll angle (S708), and returns to S701.

(Effects achieved by each operation mode)

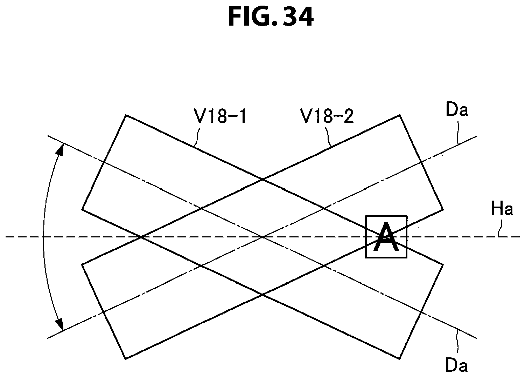

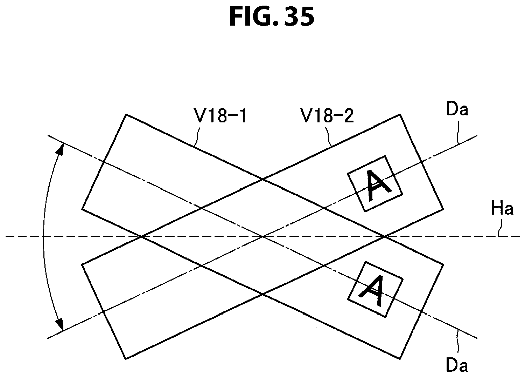

Heretofore, there has been described another example of the operation of drawing an AR object. Hereinafter, there will be described in further detail effects achieved in the case where the display mode of the AR object is roll angle-dependent and the case where the display mode of the AR object is roll angle-independent. FIG. 34 is a diagram illustrating a display example of an AR object in the case where a display mode of the AR object is roll angle-dependent. FIG. 35 is a diagram illustrating a display example of an AR object in the case where a display mode of the AR object is roll angle-independent.

In the example shown in FIG. 34, assumed is a scene in which, in the case where the display mode of the AR object A is roll angle-dependent, the visual field changes between a visual field V18-1 and a visual field V18-2 every time the user inclines his/her head. In such an example, since the AR object A moves with respect to the visual field, there is a possibility that the AR object A may be frequently out of the visual field and that visibility of the AR object A may be degraded (in particular, there is a possibility that visibility of the AR object A including characters may be degraded).

However, for example, in the case where a display angle of view is wider than a certain extent (for example, in the case where the pitch angles corresponding to the vertical and horizontal lengths of the visual field are each larger than 50°), it is less likely that the AR object is out of the visual field and it appears that blur of the AR object A is small, and therefore, there is a possibility that the position roll angle-dependent mode may be useful.

On the other hand, in the example shown in FIG. 35, assumed is an example in which, in the case where the display mode of the AR object A is roll angle-independent, the visual field changes between a visual field V18-1 and a visual field V18-2 every time the user inclines his/her head. In such an example, since the AR object A is fixed with respect to the visual field, there is no possibility that the AR object A is out of the visual field, and visibility of the AR object A can be maintained.

For example, in the case where a display angle of view is narrower than a certain extent and the visual field is horizontally oriented (for example, in the case where the pitch angle corresponding to the vertical length of the visual field is smaller than 20° and the horizontal length of the visual field is longer than the vertical length of the visual field), there is a possibility that the roll angle-independent mode may be useful.

Further, in the case where the display mode of the AR object A is roll angle-independent, since it is not necessary to perform image processing corresponding to the roll angle on the AR object A, load on the arithmetic unit can be reduced. Accordingly, the roll angle-independent mode may be applied to a system that does not have a graphics engine. Moreover, since the load on the arithmetic unit is reduced, power consumed by the arithmetic unit is reduced, battery duration can be increased, and battery weight can be reduced. Still further, with the roll angle-independent mode, a system can be simplified, and hence, cost required for constructing the system may also be reduced.

(Shape change of AR object)

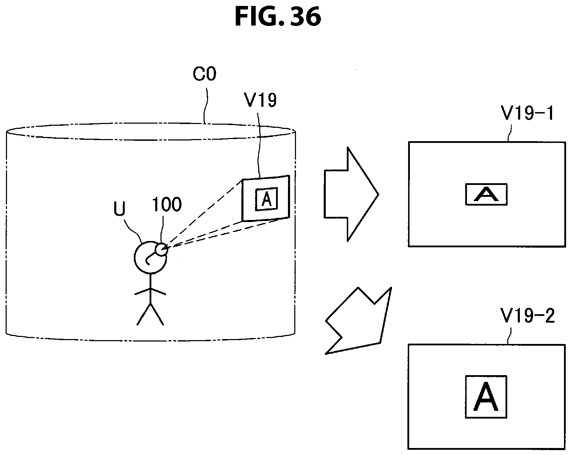

Heretofore, there has been described effects achieved in the case where the display mode of the AR object is roll angle-dependent and the case where the display mode of the AR object is roll angle-independent. Incidentally, there is a case where the AR object is a two-dimensional image and a case where the AR object is a three-dimensional object. In this case, display of the AR object may be changed between the case where the AR object is a two-dimensional image and the case where the AR object is a three-dimensional object. With reference to FIG. 36, description will be made specifically.

FIG. 36 is a diagram illustrating a display example of an AR object in the case where the AR object is a two-dimensional image and a display example of the AR object in the case where the AR object is a three-dimensional object. For example, in the case where the AR object A is a three-dimensional object, the display control unit 314 performs predetermined image processing on the AR object A, and the AR object A on which the predetermined image processing has been performed may be displayed in a visual field V19-1. In this way, it becomes possible to give a spatial effect to the three-dimensional AR object A. For example, image processing corresponding to a positional relationship between the three-dimensional AR object A and the HMD 100 (for example, image processing that enables viewing from an angle corresponding to the yaw angle and the pitch angle) may be performed on the three-dimensional AR object A.

In the example shown in FIG. 36, since a plate-like three-dimensional AR object A is stuck to the cylindrical coordinates C0, the display control unit 314 simply reduces the size of the three-dimensional AR object A in the vertical direction of the visual field V19-1, and displays the reduced three-dimensional AR object A in the visual field V19-1. In this way, in the case where the plate-like three-dimensional AR object A is stuck to the cylindrical coordinates C0, image processing of simply reducing the size of the three-dimensional AR object A in the vertical direction of the visual field V19-1 may be performed, and thus, the processing load required for drawing processing is reduced.

Note that, in the case where the ability of the HMD 100 is lower than a threshold, the display control unit 314 does not necessarily perform image processing (image processing corresponding to a positional relationship between the three-dimensional AR object A and the HMD 100 (for example, image processing that enables viewing from an angle corresponding to the yaw angle and the pitch angle)) on the AR object A even if the AR object A is a three-dimensional object. The ability of the HMD 100 may be an ability of performing processing of drawing the three-dimensional AR object A by the display control unit 314. The ability of performing processing of drawing the three-dimensional AR object A may be an ability of the arithmetic unit, or may be an ability that is obtained by excluding, from the ability of the arithmetic unit, the ability used by operation other than the processing of drawing the three-dimensional AR object A.

On the other hand, in the case where the AR object A is a two-dimensional image, the display control unit 314 may display the AR object A on which image processing is not performed in the visual field. In this way, it becomes possible for making the user to grasp that the AR object A is developed on a plane. In the example shown in FIG. 36, the AR object A on which image processing is not performed is displayed in a visual field V19-2.

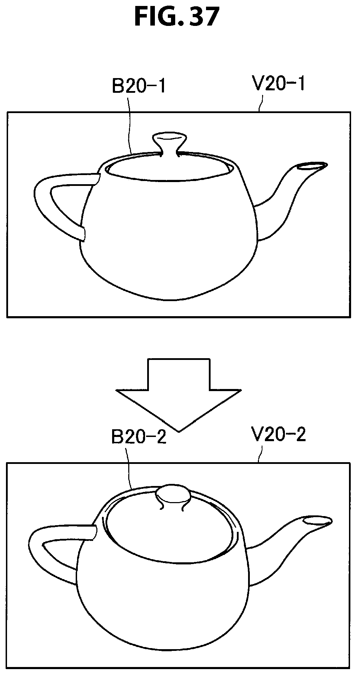

Further, FIG. 37 is a diagram illustrating a detailed display example of the case where an AR object is a three-dimensional object. In FIG. 37, an AR object B20-1 seen from the front is displayed in a visual field V20-1. Moreover, an AR object B20-2 seen from obliquely above is displayed in the visual field V20-1. As shown in this example, in the case where the AR object is a three-dimensional object, the display control unit 314 may perform image processing on the AR object such that the AR object is seen from a different angle, and may display the AR object on which the image processing has been performed.

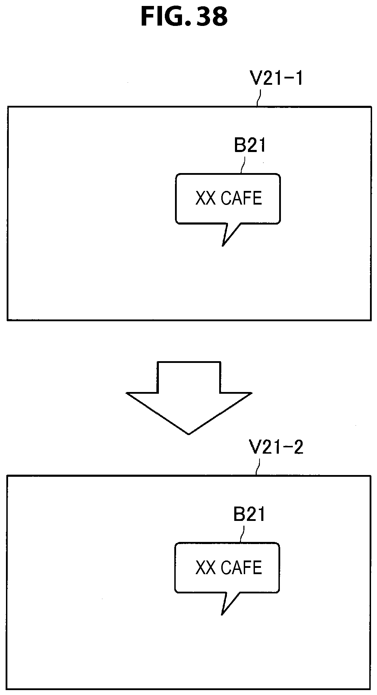

FIG. 38 is a diagram illustrating a detailed display example of the case where an AR object is a two-dimensional image. In FIG. 38, an AR object B21-1 seen from the front is displayed in a visual field V21. Moreover, an AR object B21-2 seen from obliquely above is displayed in the visual field V21. As shown in this example, in the case where the AR object is a two-dimensional image, the display control unit 314 may not perform image processing on the AR object and may display the AR object on which the image processing is not performed.

For example, the display control unit 314 may determine whether the AR object is a three-dimensional object or a two-dimensional image on the basis of information associated with the AR object by a developer of application. For example, a spatial AR object may be associated with information indicating that the object is a three-dimensional object by a developer of application. Further, for example, an AR object containing predetermined information (such as character information and icon) may be associated with information indicating that the object is a two-dimensional image by a developer of application.

(Updating of three-dimensional object)

As described above, a three-dimensional object whose positional relationship with the HMD 100 has changed differs from a two-dimensional image in that the three-dimensional object has to be updated. For example, as cases in which the positional relationship between the HMD 100 and the three-dimensional object is changed, there are assumed the case where the three-dimensional object moves and the case where the user moves. Subsequently, there will be described an example of operation of updating an AR object in the case where the AR object is a three-dimensional object (hereinafter, may also be simply referred to as "operation of updating an AR object").

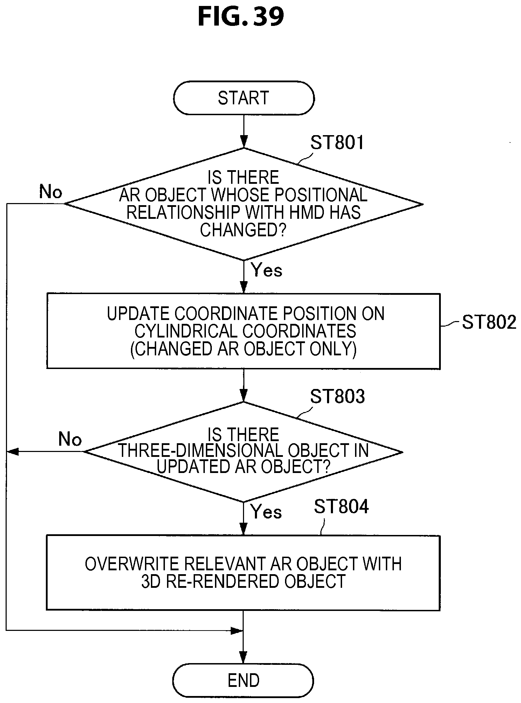

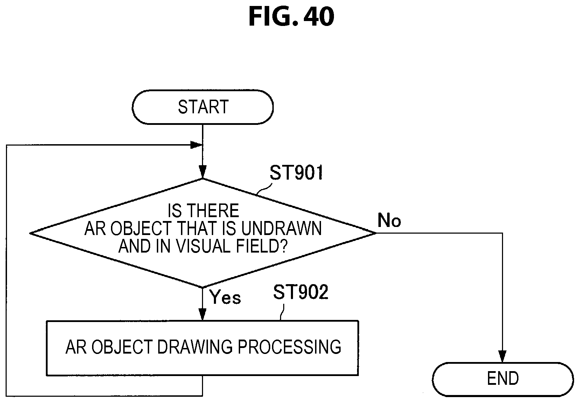

Note that, in the following description, the case is assumed in which the operation of updating an AR object is performed separately from operation of drawing an AR object. FIG. 39 is a flowchart illustrating an example of operation of updating an AR object. On the other hand, FIG. 40 is a flowchart illustrating a basic example of operation of drawing an AR object.

The cycle at which the operation of updating an AR object is not limited, and the operation of updating an AR object may be performed once every 1/30 second, for example. On the other hand, the cycle at which the operation of drawing an AR object is also not limited, and the operation of drawing an AR object may be performed at a cycle shorter than the cycle at which the operation of updating an AR object is performed. For example, the operation of drawing an AR object performed once every 1/60 second, for example.

First, a basic example of operation of drawing an AR object will be described. First, the display control unit 314 determines whether there is an AR object that is undrawn and in the visual field (step 901). Subsequently, in the case where the display control unit 314 determines that there is no AR object that is undrawn and in the visual field ("No" in step 901), the drawing operation ends. On the other hand, in the case where the display control unit 314 determines that there is an AR object that is undrawn and in the visual field ("Yes" in step 901), the display control unit 314 performs the processing of drawing the AR object (step 902), and returns to S901.

Subsequently, an example of operation of updating an AR object will be described. First, the display control unit 314 determines whether there is an AR object whose positional relationship with the HMD 100 has changed (step 801). In the case where the display control unit 314 determines that there is no AR object whose positional relationship with the HMD 100 has changed ("No" in step 801), the operation is shifted to the processing of updating the next AR object.

On the other hand, in the case where the display control unit 314 determines that there is an AR object whose positional relationship with the HMD 100 has changed ("Yes" in step 801), the display control unit 314 updates the coordinate position of the AR object on the cylindrical coordinates CO of the AR object whose positional relationship with the HMD has changed (step 802).

Subsequently, the display control unit 314 determines whether there is a three-dimensional object in the AR object in which the coordinate position of the AR object on the cylindrical coordinates CO has been updated (step 803). In the case where the display control unit 314 determines that there is no three-dimensional object in the AR object in which the coordinate position on the cylindrical coordinates CO has been updated ("No" in step 803), the operation is shifted to the processing of updating the next AR object.

On the other hand, in the case where the display control unit 314 determines that there is a three-dimensional object in the AR object in which the coordinate position on the cylindrical coordinates CO has been updated ("Yes" in step 803), the display control unit 314 overwrites the relevant AR object with a 3D re-rendered object (step 804), and the operation is shifted to the processing of updating the next AR object.

(Mix of AR object and non-AR object)

Heretofore, the example has been mainly described in which an AR object which is an object corresponding to at least one of the yaw angle and the pitch angle is provided to the visual field of the user. On the other hand, an object not corresponding to the yaw angle and the pitch angle (hereinafter, also referred to as "non-AR object") may also be provided to the visual field of the user. Hereinafter, an example of providing both an AR object and a non-AR object to the visual field of the user will be described.

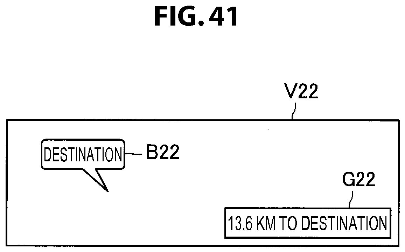

FIG. 41 is a diagram illustrating an example of providing both an AR object and a non-AR object to a visual field of a user. As shown in FIG. 41, the display control unit 314 may display an AR object B22 corresponding to the yaw angle and the pitch angle in a visual field V22. Further, for example, the display control unit 314 may display a non-AR object G22 not corresponding to the yaw angle and the pitch angle in the visual field V22.

Note that the AR object B22 indicates a direction of a destination seen from a user, and when any one of the yaw angle and the pitch angle has changed, the position of the AR object B22 in the visual field V22 of the user may also change in accordance with the change. On the other hand, the non-AR object G22 indicates a distance to the destination, and when the yaw angle and the pitch angle have changed, the position of the non-AR object G22 in the visual field V22 of the user may be fixed.

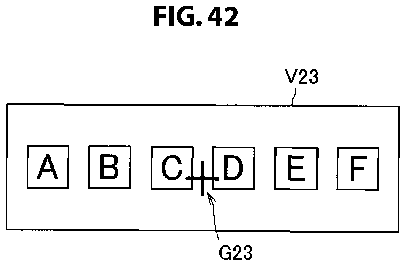

FIG. 42 is a diagram illustrating another example of providing both an AR object and a non-AR object to a visual field of a user. As shown in FIG. 42, for example, the display control unit 314 may display AR objects A to F corresponding to the yaw angle and the pitch angle in a visual field V23. Further, for example, the display control unit 314 may display a non-AR object G23 not corresponding to the yaw angle and the pitch angle in the visual field V23.

Note that the AR objects A to F are included in a menu screen, and when any one of the yaw angle and the pitch angle has changed, the positions of the AR objects A to F in the visual field V23 of the user may also change in accordance with the change. On the other hand, the non-AR object G23 indicates a selection target position (an AR object at the selection target position is selected when predetermined selecting operation is performed), and when the yaw angle and the pitch angle have changed, the position of the non-AR object G23 in the visual field V23 of the user may be fixed.

While the embodiments of the present technology have been described above, the present technology is not limited to only the above-described embodiments, and, of course, various changes can be made without departing from the gist of the present technology.

For example, while an example has been described in the above-described embodiments where the present technology is applied to the HMD, the present technology can be also applied to, for example, a head up display (HUD) mounted on a driver's seat of the vehicle, a cockpit of an airplane, or the like, as an image display apparatus other than the HMD. Alternatively, the present technology can be also applied to a contact lens type display apparatus, the present technology can be also applied to an eyewear designed for one eye, and the present technology can be also applied to a terminal such as a smartphone.

Further, while, in the above-described embodiments, an application example of the see-through type (transmission type) HMD has been described, the present technology can be also applied to a non-transmission type HMD. In this case, a predetermined object according to the present technology only has to be displayed in an external visual field photographed with a camera mounted on the display unit.

Further, while, in the above-described embodiments, the HMD 100 is configured to display an object including information relating to a predetermined subject existing in real space in the visual field V, the present technology is not limited to this, and destination guide display, or the like, may be displayed in the visual field V based on a current position or a travelling direction of the user U.

Additionally, the present technology may also be configured as below.

(1) A display control apparatus including
a display control unit configured to display an object corresponding to at least one of a yaw angle and a pitch angle of a display unit in a visual field of a user,
wherein the display control unit is capable of operating in a first mode in which a position of the object in the visual field is not dependent on a roll angle of the display unit.

(2) The display control apparatus according to (1), wherein
the display control unit is capable of operating in a second mode in which the position of the object in the visual field is dependent on the roll angle.

(3) The display control apparatus according to (2), wherein
the display control unit selects, as an operation mode, any one of the first mode and the second mode.

(4) The display control apparatus according to (3), wherein
the display control unit selects, as the operation mode, any one of the first mode and the second mode on the basis of operation performed by a user.

(5) The display control apparatus according to (3), wherein
in the case where the object is capable of accepting operation performed by a user, the display control unit selects the first mode as the operation mode.

(6) The display control apparatus according to (3), wherein
in the case where the object is a three-dimensional object, the display control unit selects the second mode as the operation mode.

(7) The display control apparatus according to (3), wherein
the display control unit selects, as the operation mode, any one of the first mode and the second mode on the basis of ability of the display control apparatus.

(8) The display control apparatus according to any one of (1) to (7), wherein
while operating in the first mode, the display control unit does not cause an orientation of the object in the visual field to depend on the roll angle.

(9) The display control apparatus according to any one of (1) to (8), wherein
while operating in the first mode, the display control unit causes an orientation of the object in the visual field to depend on the roll angle.

(10) The display control apparatus according to any one of (2) to (9), wherein
while operating in the second mode, the display control unit rotates the object in the visual field in a direction opposite to a direction of the roll angle to an extent that is the same as the roll angle.

(11) The display control apparatus according to (10), wherein
while operating in the second mode, in the case where the roll angle exceeds a predetermined angle, the display control unit rotates the position of the object in the visual field in a direction opposite to a direction of the roll angle to an extent that is the same as the predetermined angle.

(12) The display control apparatus according to (11), wherein
while operating in the second mode, in the case where the roll angle exceeds a predetermined angle, the display control unit gradually moves the position of the object in the visual field, from a position at which the display control unit rotates the position of the object in the visual field in a direction opposite to a direction of the roll angle to an extent that is the same as the roll angle to a position at which the display control unit rotates the position of the object in the visual field in the direction opposite to the direction of the roll angle to the extent that is the same as the predetermined angle.

(13) The display control apparatus according to (11) or (12), wherein
in the case where a period over which the extent of the roll angle has exceeded a threshold continues for a predetermined period, the display control unit updates the predetermined angle.

(14) The display control apparatus according to (11) or (12), wherein
in the case where a shape of the visual field satisfies a predetermined condition, the display control unit updates the predetermined angle.

(15) The display control apparatus according to any one of (2) to (14), wherein
while operating in the second mode, the display control unit causes an orientation of the object in the visual field to depend on the roll angle.

(16) The display control apparatus according to any one of (1) to (15), wherein
the display control unit causes at least the object corresponding to the pitch angle to be displayed in the visual field, and the pitch angle corresponding to the object is limited within a predetermined range.

(17) The display control apparatus according to any one of (1) to (16), wherein

in the case where the object is a three-dimensional object, the display control unit displays an object on which image processing is performed in the visual field.

(18) The display control apparatus according to any one of (1) to (17), wherein

in the case where the object is a two-dimensional image, the display control unit displays an object on which image processing is not performed in the visual field.

(19) A display control method including

displaying an object corresponding to at least one of a yaw angle and a pitch angle of a display unit in a visual field of a user,

wherein operation is possible in a first mode in which a position of the object in the visual field is not dependent on a roll angle of the display unit.

(20) A program for causing a computer to function as a display control apparatus including

a display control unit configured to display an object corresponding to at least one of a yaw angle and a pitch angle of a display unit in a visual field of a user,

wherein the display control unit is capable of operating in a first mode in which a position of the object in the visual field is not dependent on a roll angle of the display unit.


Reference Signs List

| | |
|---|---|
| 10 | display unit |
| 11R, 11L | display face |
| 12R, 12L | image generating unit |
| 20 | detecting unit |
| 30 | control unit |
| 100 | head mounted display (HMD) |
| 200 | mobile information terminal |
| 311 | coordinate setting unit |
| 312 | image managing unit |
| 313 | coordinate determining unit |
| 314 | display control unit |
| A1 to A4 | subject |
| B, B1 to B4 | object |
| C0, C1 | cylindrical coordinates (world coordinates) |
| V | visual field |
| U | user |


**Claims**

1. A display control apparatus comprising
   a display control unit configured to display an object corresponding to at least one of a yaw angle and a pitch angle of a display unit in a visual field of a user,
   wherein the display control unit is capable of operating in a first mode in which a position of the object in the visual field is not dependent on a roll angle of the display unit.

2. The display control apparatus according to claim 1, wherein
   the display control unit is capable of operating in a second mode in which the position of the object in the visual field is dependent on the roll angle.

3. The display control apparatus according to claim 2, wherein
   the display control unit selects, as an operation mode, any one of the first mode and the second mode.

4. The display control apparatus according to claim 3, wherein
   the display control unit selects, as the operation mode, any one of the first mode and the second mode on the basis of operation performed by a user.

**5.** The display control apparatus according to claim 3, wherein
in the case where the object is capable of accepting operation performed by a user, the display control unit selects the first mode as the operation mode.

**6.** The display control apparatus according to claim 3, wherein
in the case where the object is a three-dimensional object, the display control unit selects the second mode as the operation mode.

**7.** The display control apparatus according to claim 3, wherein
the display control unit selects, as the operation mode, any one of the first mode and the second mode on the basis of ability of the display control apparatus.

**8.** The display control apparatus according to claim 1, wherein
while operating in the first mode, the display control unit does not cause an orientation of the object in the visual field to depend on the roll angle.

**9.** The display control apparatus according to claim 1, wherein
while operating in the first mode, the display control unit causes an orientation of the object in the visual field to depend on the roll angle.

**10.** The display control apparatus according to claim 2, wherein
while operating in the second mode, the display control unit rotates the object in the visual field in a direction opposite to a direction of the roll angle to an extent that is the same as the roll angle.

**11.** The display control apparatus according to claim 10, wherein
while operating in the second mode, in the case where the roll angle exceeds a predetermined angle, the display control unit rotates the position of the object in the visual field in a direction opposite to a direction of the roll angle to an extent that is the same as the predetermined angle.

**12.** The display control apparatus according to claim 11, wherein
while operating in the second mode, in the case where the roll angle exceeds a predetermined angle, the display control unit gradually moves the position of the object in the visual field, from a position at which the display control unit rotates the position of the object in the visual field in a direction opposite to a direction of the roll angle to an extent that is the same as the roll angle to a position at which the display control unit rotates the position of the object in the visual field in the direction opposite to the direction of the roll angle to the extent that is the same as the predetermined angle.

**13.** The display control apparatus according to claim 11, wherein
in the case where a period over which the extent of the roll angle has exceeded a threshold continues for a predetermined period, the display control unit updates the predetermined angle.

**14.** The display control apparatus according to claim 11, wherein
in the case where a shape of the visual field satisfies a predetermined condition, the display control unit updates the predetermined angle.

**15.** The display control apparatus according to claim 2, wherein
while operating in the second mode, the display control unit causes an orientation of the object in the visual field to depend on the roll angle.

**16.** The display control apparatus according to claim 1, wherein
the display control unit causes at least the object corresponding to the pitch angle to be displayed in the visual field, and the pitch angle corresponding to the object is limited within a predetermined range.

**17.** The display control apparatus according to claim 1, wherein
in the case where the object is a three-dimensional object, the display control unit displays an object on which image processing is performed in the visual field.

**18.** The display control apparatus according to claim 1, wherein

in the case where the object is a two-dimensional image, the display control unit displays an object on which image processing is not performed in the visual field.

19. A display control method comprising
displaying an object corresponding to at least one of a yaw angle and a pitch angle of a display unit in a visual field of a user,
wherein operation is possible in a first mode in which a position of the object in the visual field is not dependent on a roll angle of the display unit.

20. A program for causing a computer to function as a display control apparatus including
a display control unit configured to display an object corresponding to at least one of a yaw angle and a pitch angle of a display unit in a visual field of a user,
wherein the display control unit is capable of operating in a first mode in which a position of the object in the visual field is not dependent on a roll angle of the display unit.

# FIG. 1

# FIG. 2

**FIG. 3**

# FIG. 4

200 — MOBILE INFORMATION TERMINAL

100

305 INPUT OPERATION UNIT

302 MEMORY

303 TRANSMITTING/ RECEIVING UNIT

30

311 — COORDINATE SETTING UNIT

312 — IMAGE MANAGING UNIT

313 — COORDINATE DETERMINING UNIT

314 — DISPLAY CONTROL UNIT

301

20

DETECTING UNIT

10 — DISPLAY UNIT

# FIG. 5A

# FIG. 5B

# FIG. 6A

## FIG. 6B

**FIG. 7**

# FIG. 8

# FIG. 9A

# FIG.9B

# FIG. 10A

# FIG. 10B

# FIG. 11A

# FIG. 11B

# FIG. 12A

# FIG. 12B

# FIG. 13

MOBILE INFORMATION TERMINAL 200                    CONTROL UNIT 30

CONFIRM NECESSITY OF
TRANSMISSION OF FRAME F3 (ST101)

REQUEST TRANSMISSION
OF FRAME F3 (ST102)

CONFIRM NECESSITY OF
TRANSMISSION OF FRAME F4 (ST103)

REQUEST TRANSMISSION
OF FRAME F4 (ST104)

NOTIFY TRANSMISSION PERMISSION
OF OBJECT DATA (ST105)

REQUEST TRANSMISSION
OF OBJECT B4 (ST106)

TRANSMIT OBJECT B4 (ST107)

REQUEST TRANSMISSION
OF OBJECT B3 (ST108)

TRANSMIT OBJECT B3 (ST109)

# FIG. 14

```
                    ┌─────────────┐
                    │    START    │
                    └─────────────┘
                           │
                           ▼
ST201 ──────┐   ┌────────────────────────┐
            │   │        MEASURE         │
            └───│     USER POSITION      │
                └────────────────────────┘
                           │
                           ▼
ST202 ──────┐   ┌────────────────────────┐
            │   │   ACQUIRE OBJECT DATA   │
            └───│        BY MOBILE        │
                │  INFORMATION TERMINAL   │
                └────────────────────────┘
                           │
                           ▼
ST203 ──────┐   ┌────────────────────────┐
            │   │       SET WORLD         │
            └───│   COORDINATE SYSTEM     │
                └────────────────────────┘
                           │
                           ▼
ST204 ──────┐   ┌────────────────────────┐
            │   │   DETECT ORIENTATION    │
            └───│     OF DISPLAY UNIT     │
                └────────────────────────┘
                           │
                           ▼
ST205 ──────┐   ┌────────────────────────┐
            │   │   STORE OBJECT DATA     │
            └───│    IN CONTROL UNIT      │
                │       (MEMORY)          │
                └────────────────────────┘
                           │
                           ▼
ST206 ──────┐   ┌────────────────────────┐
            │   │      DRAW OBJECT        │
            └───│                         │
                └────────────────────────┘
```

# FIG. 15

ST301 — CONFIRM TRANSMISSION
PERMISSION OF OBJECT DATA

ST302 — IS FRAME
REGISTRATION
COMPLETED?  →  No

Yes

ST303 — IS THERE
UNREGISTERED
OBJECT AND IS MEMORY
CAPACITY
SUFFICIENT?  →  No

Yes

ACQUIRE UNREGISTERED
OBJECT IN ACCORDANCE
WITH PRIORITY OF OBJECT

ST304

END

# FIG. 16

ST401 — CALCULATE ORIENTATION OF VISUAL FIELD

ST402 — IS THERE OBJECT FOR WHICH SCANNING IS NOT COMPLETED? — No

Yes

ST404 — DRAW IN VISUAL FIELD ← No ← OBJECT OF WORLD COORDINATE SYSTEM? — ST403

Yes

IS DISPLAY FIXING FUNCTION APPLIED? — No
ST405

Yes

DISPLAY AND FIX OBJECT AT TIME POINT AT WHICH CONDITIONS ARE SATISFIED

ST406

DRAW AT TIME POINT AT WHICH VISUAL FIELD ENTERS OBJECT POSITION

ST407

END

# FIG. 17

RP

RO

Y(LATERAL AXIS)

X(LONGITUDINAL AXIS)

RY

Z(VERTICAL AXIS)

# FIG. 18

# FIG. 19A

# FIG. 19B

V4-1

B4-1 — XX CAFE

B4-2 — YY BRAND SHOP

B4-3 — ZZ GALLERY

V4-2

B4-1

XX CAFE

YY BRAND SHOP — B4-2

ZZ GALLERY — B4-3

## FIG. 20

# FIG. 21

# FIG. 22

# FIG. 23

# FIG. 24

# FIG. 25

# FIG. 26

# FIG. 27

# FIG. 28

# FIG. 29

V15-1

Ha        A                    B        Da

V15-2        Pb

A        Pa × ........ × 

B        Ha

# FIG. 30

V16-1

B16-1

SCREWS

Ha

T16

V16-2

SCREWS

B16-2

Ha

T16

# FIG. 31

# FIG.32

START

ST601 — IS THERE AR OBJECT THAT IS UNDRAWN AND IN VISUAL FIELD?

No → END

Yes

ST602 — IS AR OBJECT DEPENDENT ON ROLL ANGLE?

No → ST604 — ROLL ANGLE-INDEPENDENT DRAWING PROCESSING

Yes → ST603 — ROLL ANGLE-DEPENDENT DRAWING PROCESSING

EP 3 229 104 A1

# FIG. 33

START

ST701
IS THERE AR OBJECT THAT IS UNDRAWN AND IN VISUAL FIELD? — No

Yes

ST702
DOES AR OBJECT HAVE HEIGHT LIMITATION ATTRIBUTE? — No

Yes

ST703
IS AR OBJECT DEPENDENT ON ROLL ANGLE? — No

Yes ST705
DRAWING PROCESSING TAKING INTO ACCOUNT HEIGHT LIMITATION AND ROLL ANGLE

ST705
DRAWING PROCESSING TAKING INTO ACCOUNT HEIGHT LIMITATION

ST704
IS AR OBJECT DEPENDENT ON ROLL ANGLE? — No

Yes ST707
DRAWING PROCESSING TAKING INTO ACCOUNT ROLL ANGLE

ST708
DRAWING PROCESSING NOT TAKING INTO ACCOUNT HEIGHT LIMITATION AND ROLL ANGLE

END

# FIG. 34

# FIG. 35

## FIG. 36

# FIG. 37

B20-1          V20-1

B20-2          V20-2

# FIG. 38

# FIG. 39

START

ST801

IS THERE
AR OBJECT WHOSE POSITIONAL
RELATIONSHIP WITH HMD HAS
CHANGED?

No

Yes

UPDATE COORDINATE POSITION ON
CYLINDRICAL COORDINATES
(CHANGED AR OBJECT ONLY)

ST802

ST803

IS THERE
THREE-DIMENSIONAL OBJECT IN
UPDATED AR OBJECT?

No

Yes    ST804

OVERWRITE RELEVANT AR OBJECT WITH
3D RE-RENDERED OBJECT

END

# FIG. 40

```
                    ┌─────────────┐
                    │    START    │
                    └─────────────┘
                           │
        ┌──────────────────┤
        │                  ▼            ST901
        │               ╱─────╲
        │             ╱         ╲
        │           ╱    IS THERE  ╲         No
        │         ╱ AR OBJECT THAT IS ╲────────────┐
        │         ╲ UNDRAWN AND IN    ╱             │
        │           ╲ VISUAL FIELD? ╱               │
        │             ╲           ╱                 │
        │               ╲───────╱                   │
        │                  │Yes      ST902          │
        │                  ▼                        │
        │    ┌──────────────────────────────┐       │
        │    │  AR OBJECT DRAWING PROCESSING │       │
        │    └──────────────────────────────┘       ▼
        │                  │                  ┌───────────┐
        └──────────────────┘                  │    END    │
                                              └───────────┘
```

# FIG. 41

V22

DESTINATION — B22

G22

13.6 KM TO DESTINATION

# FIG. 42

V23

A B C D E F

G23

## INTERNATIONAL SEARCH REPORT

| International application No. |
| --- |
| PCT/JP2015/075492 |

| A. CLASSIFICATION OF SUBJECT MATTER |
| --- |
| *G06F3/01*(2006.01)i, *G06F3/0484*(2013.01)i, *G06T19/00*(2011.01)i, *G09G5/00* (2006.01)i, *G09G5/36*(2006.01)i |
| According to International Patent Classification (IPC) or to both national classification and IPC |

| B. FIELDS SEARCHED |
| --- |
| Minimum documentation searched (classification system followed by classification symbols)<br>G06F3/01, G06F3/0484, G06T19/00, G09G5/00, G09G5/36 |
| Documentation searched other than minimum documentation to the extent that such documents are included in the fields searched<br>    Jitsuyo Shinan Koho        1922-1996   Jitsuyo Shinan Toroku Koho   1996-2015<br>    Kokai Jitsuyo Shinan Koho   1971-2015   Toroku Jitsuyo Shinan Koho   1994-2015 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X<br><br>Y<br><br>A | JP 2014-98564 A (Panasonic Corp.),<br>29 May 2014 (29.05.2014),<br>paragraphs [0011] to [0019]; fig. 1 to 4<br>(Family: none) | 1-2,8,10,15,<br>19-20<br>3-7,11-12,<br>16-18<br>9,13-14 |
| Y | WO 2014/129204 A1 (Sony Corp.),<br>28 August 2014 (28.08.2014),<br>paragraphs [0075], [0090] to [0092], [0152],<br>[0159]; fig. 5A to 5B, 17, 19<br>& US 2015/0130837 A1<br>paragraphs [0125], [0141] to [0144], [0216],<br>[0223]; fig. 5A to 5B, 17, 19<br>& WO 2014/128810 A1    && US 2015/0049002 A1<br>& CN 104246864 A        && CN 104221077 A | 3-7,11-12,<br>16-18 |

| ☐ Further documents are listed in the continuation of Box C. | ☐ See patent family annex. |
| --- | --- |

| \* | Special categories of cited documents: | "T" | later document published after the international filing date or priority |
| --- | --- | --- | --- |
| "A" | document defining the general state of the art which is not considered   to be of particular relevance | | date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    18 November 2015 (18.11.15) | Date of mailing of the international search report<br>    01 December 2015 (01.12.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012053643 A